(19) **Europäisches Patentamt / European Patent Office / Office européen des brevets**

(11) **EP 3 402 187 A1**

(12) **EUROPEAN PATENT APPLICATION**
published in accordance with Art. 153(4) EPC

(43) Date of publication:
**14.11.2018 Bulletin 2018/46**

(21) Application number: **16883637.7**

(22) Date of filing: **08.01.2016**

(51) Int Cl.:
**H04N 9/07** (2006.01)

(86) International application number:
**PCT/JP2016/050572**

(87) International publication number:
**WO 2017/119134 (13.07.2017 Gazette 2017/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Olympus Corporation
Hachioji-shi, Tokyo 192-8507 (JP)**

(72) Inventors:
• **MARUYAMA, Hiroki
Tokyo 192-8507 (JP)**
• **ICHIKAWA, Manabu
Tokyo 192-8507 (JP)**

(74) Representative: **Winter, Brandl, Fürniss, Hübner, Röss, Kaiser, Polte - Partnerschaft mbB
Patent- und Rechtsanwaltskanzlei
Alois-Steinecker-Strasse 22
85354 Freising (DE)**

(54) **IMAGE PROCESSING APPARATUS, IMAGE PROCESSING METHOD, AND PROGRAM**

(57) Provided are an image processing apparatus, an image processing method, and a program capable of correcting variation in spectral sensitivity depending on conditions of neighboring pixels. An image processing apparatus 40 includes a second external I/F unit 41 that acquires image data and a correction coefficient from the imaging apparatus 10, a correction amount calculating unit 441 that calculates an estimated value of a color component to be corrected in a pixel of interest and calculates a correction amount of a pixel value of the pixel of interest based on the estimated value and the correction coefficient of the pixel of interest, and a pixel value correcting unit 442 that corrects the pixel value of the pixel of interest based on the correction amount calculated by the correction amount calculating unit 441.

**FIG.1A**

**Description**

Field

The present invention relates to an image processing apparatus, an image processing method, and a program for correcting spectral sensitivity characteristics of a color filter provided at each of pixels of an imaging element.

Background

Conventionally, there is a known technology, in which variation in spectral sensitivity of a pixel due to variation in a spectral transmittance of a color filter arranged on a light receiving surface of an imaging element, such as a charge coupled device (CCD) or a complementary metal oxide semiconductor (CMOS), in an imaging apparatus, such as a digital camera, is adjusted for each imaging element (see Patent Literature 1). In this technology, a value of each of color components of red (R), green (G), and blue (B) is calculated for each wavelength from image data that is provided as a combination of R, G, and B components by causing an imaging element to perform photoelectric conversion on visible light that is obtained through spectral dispersion using a prism; a correction coefficient to be multiplied by the value of each of R, G, and B is calculated such that a difference between the calculated value of each of R, G, and B and a reference value that is calculated in advance for each wavelength can be reduced; and thereafter, variation in spectral sensitivity of each imaging element is corrected using the correction coefficient.

Citation List

Patent Literature

Patent Literature 1: JP 2010-193378 A

Summary

Technical Problem

However, in Patent Literature 1 as described above, variation in the spectral sensitivity is corrected using the same correction method for each of a pixel value of a pixel of interest and pixel values of neighboring pixels; therefore, correction performance may be degraded depending on conditions of the neighboring pixels.

The present invention has been conceived in view of the foregoing, and an object is to provide an image processing apparatus, an image processing method, and a program capable of correcting variation in spectral sensitivity in accordance with conditions of neighboring pixels.

Solution to Problem

To solve the above-described problem and achieve the object, an image processing apparatus according to the present invention includes: an acquiring unit configured to acquire image data generated by an imaging element, in which a predetermined arrangement pattern is formed using color filters of a plurality of colors with different spectral transmittances and each of the color filters is arranged at a position corresponding to one of pixels, and acquire a correction coefficient, which is for correcting a pixel value difference that corresponds to a difference between spectral sensitivity of a pixel of interest and reference spectral sensitivity set in advance in a predetermined wavelength region, from a recording unit that records the correction coefficient for each of the pixels; a correction amount calculating unit configured to calculate an estimated value of a color component to be corrected in the pixel of interest, and calculate a correction amount of a pixel value of the pixel of interest based on the estimated value and the correction coefficient of the pixel of interest; and a pixel value correcting unit configured to correct the pixel value of the pixel of interest based on the correction amount calculated by the correction amount calculating unit, wherein the correction amount calculating unit changes a method of calculating the estimated value and a method of calculating the correction amount depending on a predetermined condition.

Moreover, in the above-described image processing apparatus according to the present invention, the correction amount calculating unit changes the method of calculating the estimated value depending on whether pixel values of different-color pixels are saturated, the different-color pixels being pixels which are present on a periphery of the pixel of interest and for which color filters of a certain color different from a color of the color filter arranged on the pixel of interest is arranged.

Moreover, in the above-described image processing apparatus according to the present invention, the correction amount calculating unit is further configured to, when the pixel values of the different-color pixels are saturated, calculate similarities from candidate values of the estimated value, from theoretical values of pixel values of neighboring same-color pixels that are present on the periphery of the pixel of interest and that are calculated based on the correction coefficients of respective pixels of the neighboring same-color pixels for which color filters having a same color as the color of the color filter arranged on the pixel of interest are arranged, and from measurement values of the pixel values of the neighboring same-color pixels, and calculate a candidate value with a high similarity as the estimated value, and when the pixel values of the different-color pixels are not saturated, calculate the estimated value of the color component to be corrected in the pixel of interest by using pixel values of respective pixels of neighboring pixels that are present on the periphery of the pixel of interest.

Moreover, in the above-described image processing apparatus according to the present invention, the theoretical value is a product of the candidate value and the correction coefficient of each of the neighboring same-color pixels.

Moreover, in the above-described image processing apparatus according to the present invention, the similarity is a value that is based on the theoretical value and the measurement value of each of the neighboring same-color pixels.

Moreover, in the above-described image processing apparatus according to the present invention, the correction amount calculating unit changes the method of calculating the estimated value depending on whether pixel values of neighboring pixels present on the periphery of the pixel of interest are flat.

Moreover, in the above-described image processing apparatus according to the present invention, the correction amount calculating unit is further configured to when the pixel values of the neighboring pixels are flat, calculate the estimated value of the color component to be corrected in the pixel of interest by using the pixel values of the neighboring pixels, or calculate the estimated value of the color component to be corrected in the pixel of interest by using the pixel values of the neighboring pixels and the correction coefficient, and when the pixel values of the neighboring pixels are not flat, change a pixel range to be referred to in accordance with an edge direction of the neighboring pixels, and calculate the estimated value of the color component to be corrected in the pixel of interest by using the pixel values of the neighboring pixels or calculate the estimated value of the color component to be corrected in the pixel of interest by using the pixel values of the neighboring pixels and the correction coefficient.

Moreover, in the above-described image processing apparatus according to the present invention, the correction amount calculating unit changes the method of calculating the estimated value depending on a size of random noise of the neighboring pixels that are present on the periphery of the pixel of interest.

Moreover, in the above-described image processing apparatus according to the present invention, the correction amount calculating unit changes a pixel range to be referred to or a shape of the pixel range depending on the size of the random noise, and calculates an estimated value of a color component having a same color as different-color pixels, which are present on the periphery of the pixel of interest and for which color filters of a certain color different from the color of the color filter arranged on the pixel of interest are arranged.

Moreover, in the above-described image processing apparatus according to the present invention, the correction amount calculating unit changes neighboring pixels to be referred to depending on an arrangement pattern of the color filter arranged on the imaging element, and calculates a correction amount of a color component having a same color as different color pixels, which are present on the periphery of the pixel of interest and for which color filters of a certain color different from the color of the color filter arranged on the pixel of interest are arranged.

Moreover, in the above-described image processing apparatus according to the present invention, the pixel value correcting unit subtracts the correction amount calculated by the correction amount calculating unit from the pixel value of the pixel of interest.

Moreover, in the above-described image processing apparatus according to the present invention, the pixel value correcting unit corrects the pixel value of the pixel of interest by using the correction amount such that a corrected pixel value of the pixel of interest falls in a range between an average value of the pixel values of the neighboring same-color pixels and the pixel value of the pixel of interest.

Moreover, in the above-described image processing apparatus according to the present invention, when a difference between a value that is obtained by subtracting the correction amount from the pixel value of the pixel of interest and the average value of the pixel values of the neighboring same-color pixels is larger than a predetermined value, the pixel value correcting unit does not subtract the correction value from the pixel value of the pixel of interest.

Moreover, in the above-described image processing apparatus according to the present invention, the correction amount calculating unit changes the method of calculating the estimated value or the method of calculating the correction amount by switching between a plurality of the methods.

Moreover, in the above-described image processing apparatus according to the present invention, the correction amount calculating unit changes a synthesis ratio for synthesizing calculation results obtained through a plurality of methods of calculating the estimated value and calculation results obtained through a plurality of methods of calculating the correction amount.

Moreover, an image processing method according to the present invention includes: an acquisition step of acquiring image data generated by an imaging element, in which a predetermined arrangement pattern is formed using color filters of a plurality of colors with different spectral transmittances and each of the color filters is arranged at a position corresponding to one of pixels, and acquiring a correction coefficient, which is for correcting a pixel value difference that corresponds to a difference between spectral sensitivity of a pixel of interest and reference spectral sensitivity set in advance in a predetermined wavelength region, from a recording unit that records the correction coefficient for each of the pixels; a correction amount calculation step of calculating an estimated value of a color component to be corrected in the pixel of interest, and calculating a correction amount of a pixel value of the pixel of interest based on the estimated value and the correction coefficient of the pixel of interest; and a pixel value correction step of correcting the pixel value of the pixel of interest based on the correction amount calculated at the correction amount calculation step, wherein the correction amount calculation step includes changing a method of calculating the estimated value and a method of calculating the correction amount depending on a predetermined condition.

Moreover, a program according to the present invention causes an image processing apparatus to perform: an acquisition step of acquiring image data generated by an imaging element, in which a predetermined arrangement pattern is formed using color filters of a plurality of colors with different spectral transmittances and each of the color filters is arranged at a position corresponding to one of pixels, and acquiring a correction coefficient, which is for correcting a pixel value difference that corresponds to a difference between spectral sensitivity of a pixel of interest and reference spectral sensitivity set in advance in a predetermined wavelength region, from a recording unit that records the correction coefficient for each of the pixels; a correction amount calculation step of calculating an estimated value of a color component to be corrected in the pixel of interest, and calculating a correction amount of a pixel value of the pixel of interest based on the estimated value and the correction coefficient of the pixel of interest; and a pixel value correction step of correcting the pixel value of the pixel of interest based on the correction amount calculated at the correction amount calculation step, wherein the correction amount calculation step includes changing a method of calculating the estimated value and a method of calculating the correction amount depending on a predetermined condition. Advantageous Effects of Invention

According to the present invention, it is possible to correct variation in spectral sensitivity in accordance with conditions of neighboring pixels.

Brief Description of Drawings

FIG. 1A is a block diagram schematically illustrating a configuration of an imaging system according to a first embodiment of the present invention.
FIG. 1B is a block diagram schematically illustrating a configuration of a color filter according to the first embodiment of the present invention.
FIG. 2 is a flowchart illustrating an outline of a process performed by an image processing apparatus according to the first embodiment of the present invention.
FIG. 3 is a flowchart illustrating an outline of a correction amount calculation process illustrated in FIG. 2.
FIG. 4 is a flowchart illustrating an outline of an R-component correction amount calculation process in FIG. 3.
FIG. 5 is a flowchart illustrating an outline of a G-component correction amount calculation process in FIG. 3.
FIG. 6 is a flowchart illustrating an outline of a B-component correction amount calculation process in FIG. 3.
FIG. 7 is a flowchart illustrating an outline of an R-component estimated value calculation process in FIG. 4.
FIG. 8 is a flowchart illustrating an outline of an R-component estimated value calculation process based on average in FIG. 7.
FIG. 9 is a flowchart illustrating an outline of an R-component estimated value calculation process based on similarity in FIG. 7.
FIG. 10 is a diagram schematically illustrating a method of calculating an R-component estimated value calculated by a correction amount calculating unit according to the first embodiment of the present invention.
FIG. 11 is a flowchart illustrating an outline of a similarity calculation process on each of R-component candidate values in FIG. 9.
FIG. 12 is a flowchart illustrating an outline of a correction amount calculation process on a pixel value of a pixel of interest (x, y) in FIG. 3.
FIG. 13 is a flowchart illustrating an outline of a correction amount calculation process performed on a pixel value of a pixel of interest (x, y) by an image processing apparatus according to a modification of the first embodiment of the present invention.
FIG. 14 is a flowchart illustrating an outline of an R-component estimated value calculation process performed by an image processing apparatus according to a second embodiment of the present invention.
FIG. 15 is a flowchart illustrating an outline of an R-component estimated value calculation process based on consideration of a flat direction in FIG. 14.

FIG. 16 is a flowchart illustrating an outline of an R-component flatness calculation process in FIG. 14.

FIG. 17A is a diagram illustrating an example of direction determination on an R component performed by a correction amount calculating unit.

FIG. 17B is a diagram illustrating an example of the direction determination on the R component performed by the correction amount calculating unit.

FIG. 17C is a diagram illustrating an example of the direction determination on the R component performed by the correction amount calculating unit.

FIG. 17D is a diagram illustrating an example of the direction determination on the R component performed by the correction amount calculating unit.

FIG. 17E is a diagram illustrating an example of the direction determination on the R component performed by the correction amount calculating unit.

FIG. 17F is a diagram illustrating an example of the direction determination on the R component performed by the correction amount calculating unit.

FIG. 17G is a diagram illustrating an example of the direction determination on the R component performed by the correction amount calculating unit.

FIG. 17H is a diagram illustrating an example of the direction determination on the R component performed by the correction amount calculating unit.

FIG. 17I is a diagram illustrating an example of the direction determination on the R component performed by the correction amount calculating unit.

FIG. 17J is a diagram illustrating an example of the direction determination on the R component performed by the correction amount calculating unit.

FIG. 17K is a diagram illustrating an example of the direction determination on the R component performed by the correction amount calculating unit.

FIG. 17L is a diagram illustrating an example of the direction determination on the R component performed by the correction amount calculating unit.

FIG. 17M is a diagram illustrating an example of the direction determination on the R component performed by the correction amount calculating unit.

FIG. 17N is a diagram illustrating an example of the direction determination on the R component performed by the correction amount calculating unit.

FIG. 17O is a diagram illustrating an example of the direction determination on the R component performed by the correction amount calculating unit.

FIG. 17P is a diagram illustrating an example of the direction determination on the R component performed by the correction amount calculating unit.

FIG. 18 is a flowchart illustrating an outline of an R-component estimated value calculation process performed by an image processing apparatus according to a third embodiment of the present invention.

FIG. 19 is a flowchart illustrating an outline of an R-component estimated value calculation process performed by an image processing apparatus according to a modification of the third embodiment of the present invention.

FIG. 20 is a diagram illustrating a relationship between a standard deviation and a weight coefficient.

FIG. 21 is a flowchart illustrating an outline of a correction amount calculation process performed by an image processing apparatus according to a fourth embodiment of the present invention.

FIG. 22A is a diagram schematically illustrating a configuration of a color filter with arrangement B.

FIG. 22B is a diagram schematically illustrating a configuration of a color filter with arrangement C.

FIG. 22C is a diagram schematically illustrating a configuration of a color filter according to a first modification of the first to fourth embodiments.

FIG. 22D is a diagram schematically illustrating a configuration of a color filter according to a second modification of the first to fourth embodiments.

FIG. 22E is a diagram schematically illustrating a configuration of a color filter according to a third modification of the first to fourth embodiments.

FIG. 22F is a diagram schematically illustrating a configuration of a color filter according to a fourth modification of the first to fourth embodiments.

FIG. 22G is a diagram schematically illustrating a configuration of a color filter according to a fifth modification of the first to fourth embodiments. Description of Embodiments

Modes for carrying out the present invention (hereinafter, referred to as "embodiments") will be described below with reference to the drawings. The present invention is not limited by the embodiments described below. The same components are denoted by the same reference signs throughout the drawings.

(First Embodiment)

<Configuration of Imaging System>

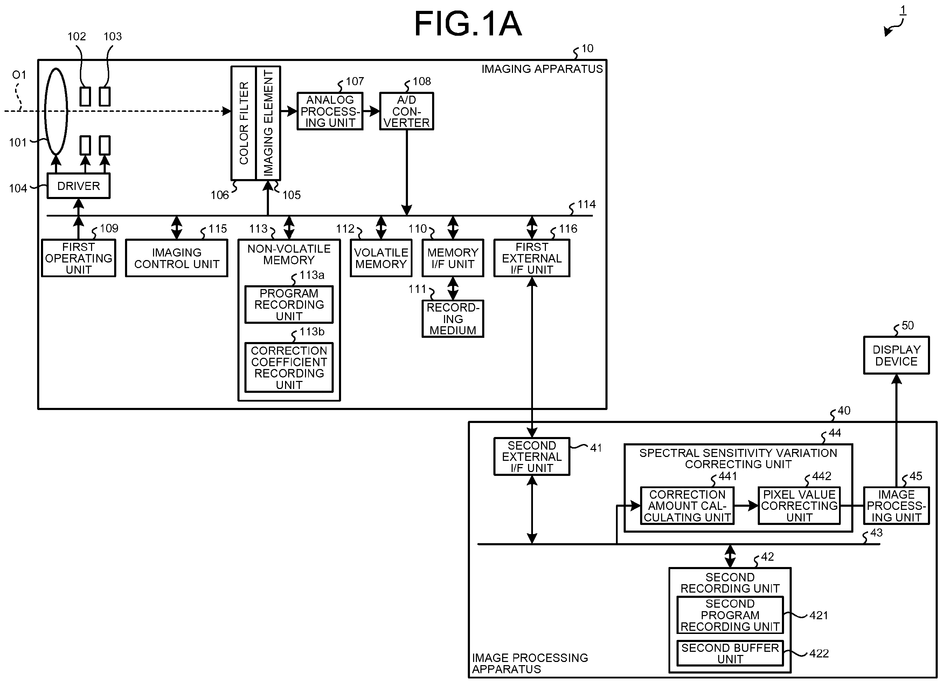

FIG. 1A is a block diagram schematically illustrating a configuration of an imaging system according to a first embodiment of the present invention. An imaging system 1 illustrated in FIG. 1A includes an imaging apparatus 10, an image processing apparatus 40, and a display device 50.

<Configuration of Imaging Apparatus>

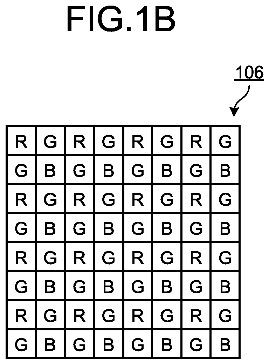

First, a configuration of the imaging apparatus 10 will be described. The imaging apparatus 10 includes an optical system 101, a diaphragm 102, a shutter 103, a driver 104, an imaging element 105, a color filter 106, an analog processing unit 107, an analog-to-digital (A/D) converter 108, a first operating unit 109, a memory interface (I/F) unit 110, a recording medium 111, a volatile memory 112, a non-volatile memory 113, a bus 114, an imaging control unit 115, and a first external I/F unit 116.
The optical system 101 is constituted by one or more lenses. The optical system 101 is constituted by, for example, a focus lens and a zoom lens.
The diaphragm 102 adjusts exposure by limiting an incident amount of light collected by the optical system 101. The diaphragm 102 limits the incident amount of light collected by the optical system 101 under the control of the imaging control unit 115. It may be possible to control the incident amount of light by using the shutter 103 or an electronic shutter in the imaging element 105 without using the diaphragm 102.
The shutter 103 sets a state of the imaging element 105 to an exposure state or a light blocking state under the control of the imaging control unit 115. The shutter 103 is constituted by, for example, a focal plane shutter or the like. It may be possible to use the electronic shutter in the imaging element 105 without using the shutter 103.
The driver 104 drives the optical system 101, the diaphragm 102, and the shutter 103 under the control of the imaging control unit 115 to be described later. For example, the driver 104 moves the optical system 101 along an optical axis O1 to change a zoom magnification or adjust a focus position of the imaging apparatus 10.
The imaging element 105 receives light collected by the optical system 101, converts the light into image data (electrical signal), and outputs the image data under the control of the imaging control unit 115 to be described later. The imaging element 105 is constituted by an image sensor, such as a complementary metal oxide semiconductor (CMOS) or a charge coupled device (CCD), having a plurality of pixels arranged two-dimensionally. Further, the imaging element 105 has an electronic shutter function capable of electronically controlling the amount of light received.
The color filter 106 is arranged on a light receiving surface of the imaging element 105 in a laminated manner. The color filter 106 is configured such that a plurality of color filters that transmit light in mutually different wavelength ranges constitute a predetermined arrangement pattern, and each of the color filters constituting the arrangement pattern is arranged in a position corresponding to one of the pixels of the imaging element 105. As illustrated in FIG. 1B, the color filter 106 is configured such that each of a filter R, which transmits light in a wavelength range of red, a filter G, which transmits light in a wavelength range of green, and a filter B, which transmits light in a wavelength range of blue, in Bayer arrangement is arranged on the light receiving surface of each of the pixels of the imaging element 105. In the following description, a pixel for which the filter R is arranged on the light receiving surface will be referred to as an R pixel, a pixel for which the filter G is arranged on the light receiving surface will be referred to as a G pixel, and a pixel for which the filter B is arranged on the light receiving surface will be referred to as a B pixel. In the first embodiment, the color filter 106 will be described as Bayer arrangement, but the embodiments are not limited to this example. For example, filter arrangement using a complementary color filter may be adopted.
The analog processing unit 107 performs predetermined analog processing on an analog signal output from the imaging element 105, and outputs the analog signal to the A/D converter 108. Specifically, the analog processing unit 107 performs noise reduction processing, gain-up processing, or the like on the analog signal input from the imaging element 105. For example, the analog processing unit 107 performs reset noise reduction or the like on the analog signal, subsequently performs waveform shaping, and then performs gain-up to obtain desired brightness.
The A/D converter 108 performs A/D conversion on the analog signal input from the analog processing unit 107 to generate digital image data (hereinafter, referred to as "RAW image data"), and outputs the RAW image data to the volatile memory 112 via the bus 114. The A/D converter 108 may directly output the RAW image data to each of units of the imaging apparatus 10 to be described later. It may be possible to provide the color filter 106, the analog processing unit 107, and the A/D converter 108 as described above in the imaging element 105, and cause the imaging element 105 to directly output the digital RAW image data.
The first operating unit 109 gives an instruction to each of the units of the imaging apparatus 10. Specifically, the first operating unit 109 includes a power switch for changing a power supply state of the imaging apparatus 10 to an ON-state or an OFF-state, a release switch for giving an instruction on imaging of a still image, an operation switch for changing various settings of the imaging apparatus 10, a moving image switch for giving an instruction on imaging of a moving image, and the like.

The recording medium 111 is constituted by a memory card attached from outside the imaging apparatus 10, and detachably attached to the imaging apparatus 10 via the memory I/F unit 110. Further, the recording medium 111 may output each of programs and various kinds of information to the non-volatile memory 113 via the memory I/F unit 110 under the control of the imaging control unit 115.

The volatile memory 112 temporarily stores therein image data that is input from the A/D converter 108 via the bus 114. For example, the volatile memory 112 temporarily stores image data that is sequentially output for one frame by the imaging element 105 via the analog processing unit 107, the A/D converter 108, and the bus 114. The volatile memory 112 is constituted by a synchronous dynamic random access memory (SDRAM) or the like.

The non-volatile memory 113 records various programs for operating the imaging apparatus 10 and various kinds of data used during execution of the programs. Further, the non-volatile memory 113 includes a program recording unit 113a and a correction coefficient recording unit 113b that records a correction coefficient for correcting variation in the spectral sensitivity of each of the pixels of the imaging element 105 input via the first external I/F unit 116. Here, the correction coefficient is a coefficient for correcting a pixel value difference that corresponds to a difference between spectral sensitivity of a pixel of interest and reference spectral sensitivity set in advance in a predetermined wavelength region. Further, the reference spectral sensitivity is average spectral sensitivity of pixels of the same color in the color filters in a case where light is uniformly applied to the imaging element 105. The correction coefficient is calculated in advance by a device (not illustrated) and recorded in the correction coefficient recording unit 113b.

The bus 114 is constituted by a channel or the like that connects each of the components of the imaging apparatus 10, and transfers various kinds of data generated inside the imaging apparatus 10 to each of the components of the imaging apparatus 10.

The imaging control unit 115 is constituted by a central processing unit (CPU) or the like, and comprehensively controls operation of the imaging apparatus 10 by transferring instructions, data, and the like to each of the components of the imaging apparatus 10 in accordance with an instruction signal or a release signal from the first operating unit 109. For example, when a second release signal is input from the first operating unit 109, the imaging control unit 115 causes the imaging apparatus 10 to start imaging operation. Here, the imaging operation of the imaging apparatus 10 is operation in which the analog processing unit 107 and the A/D converter 108 perform predetermined processing on an analog signal output by the imaging element 105. The image data subjected to the processing as described above is recorded in the recording medium 111 via the bus 114 and the memory I/F unit 110 under the control of the imaging control unit 115.

The first external I/F unit 116 outputs information input from an external apparatus via the bus 114 to the non-volatile memory 113 or the volatile memory 112, and outputs information stored in the volatile memory 112, information stored in the non-volatile memory 113, and image data generated by the imaging element 105 to an external apparatus via the bus 114. Specifically, the first external I/F unit 116 outputs the image data generated by the imaging element 105 and the correction coefficient recorded by the correction coefficient recording unit 113b to the image processing apparatus 40 via the bus 114.

<Configuration of Image Processing Apparatus>

Next, a configuration of the image processing apparatus 40 will be described.

The image processing apparatus 40 includes a second external I/F unit 41, a second recording unit 42, a bus 43, a spectral sensitivity variation correcting unit 44, and an image processing unit 45.

The second external I/F unit 41 acquires the image data generated by the imaging element 105 and the correction coefficient recorded by the correction coefficient recording unit 113b via the first external I/F unit 116 of the imaging apparatus 10, and outputs the acquired image data and correction coefficient to the spectral sensitivity variation correcting unit 44 or a second buffer unit 422. The second external I/F unit 41 and the first external I/F unit 116 are connected to each other via a control cable, a wireless channel, or the like that enables bi-directional transmission and reception of information, for example. The second external I/F unit 41 functions as an acquiring unit according to the first embodiment.

The second recording unit 42 is constituted by a volatile memory and a nonvolatile memory, and records the image data, the correction coefficient, various programs for operating the image processing apparatus 40, and various kinds of data used during execution of the programs, which are input from the imaging apparatus 10 via the second external I/F unit 41. Further, the second recording unit 42 includes a second program recording unit 421 that records a program for driving the image processing apparatus 40, and the second buffer unit 422 that temporarily stores therein image data and a correction coefficient of a pixel of interest, which are input from the imaging apparatus 10.

The bus 43 is constituted by a channel or the like that connects each of the components of the image processing apparatus 40, and transfers various kinds of data generated inside the image processing apparatus 40 to each of the components of the image processing apparatus 40.

The spectral sensitivity variation correcting unit 44 corrects variation in the spectral sensitivity of each of pixels of an image corresponding to the image data acquired by the second external I/F unit 41, and outputs the corrected spectral sensitivity to the image processing unit 45. The spectral sensitivity variation correcting unit 44 includes a correction amount calculating unit 441 and a pixel value correcting unit 442. When the image data includes an optical black value (OB value), the spectral sensitivity variation correcting unit 44 may perform OB subtraction processing.

The correction amount calculating unit 441 calculates an estimated value of a color component to be corrected in the pixel of interest, and calculates a correction amount of the pixel value of the pixel of interest based on the estimated value and the correction coefficient of the pixel of interest. Further, the correction amount calculating unit 441 changes a method of calculating the estimated value or a method of calculating the correction amount depending on a predetermined condition. Here, the predetermined condition is that pixel values of different-color pixels are saturated, where the different-color pixels are pixels which are present on the periphery of the pixel of interest and for which color filters of a certain color different from a color of the color filter arranged on the pixel of interest are arranged. That is, the correction amount calculating unit 441 changes the method of calculating the estimated value depending on whether the pixel values of the different-color pixels, which are present on the periphery of the pixel of interest and for which color filters of a certain color different from the color of the color filter arranged on the pixel of interest is arranged, is saturated.

The pixel value correcting unit 442 corrects the pixel value of the pixel of interest using the correction amount calculated by the correction amount calculating unit 441. Specifically, the pixel value correcting unit 442 corrects the pixel value of the pixel of interest by subtracting the correction amount calculated by the correction amount calculating unit 441 from the pixel value of the pixel of interest, and outputs the corrected pixel value to the image processing unit 45.

The image processing unit 45 performs predetermined image processing on the image data for which variation in the spectral sensitivity has been corrected by the spectral sensitivity variation correcting unit 44, and outputs the image data to the display device 50. Here, the predetermined image processing is basic image processing including white balance adjustment processing and, in a case where the imaging element 105 has Bayer arrangement, includes image data synchronization processing, color matrix calculation processing, gamma correction processing, color reproduction processing, edge enhancement processing, noise reduction processing, and the like. Further, the image processing unit 45 performs image processing for reproducing a natural image based on pre-set parameters of each image processing. Here, the parameters of each image processing are values of contrast, sharpness, saturation, white balance, and tone. It may be possible to record the image data subjected to the predetermined image processing in the non-volatile memory 113 or the recording medium 111 of the imaging apparatus 10 via the second external I/F unit 41.

<Configuration of Display Device>

Next, a configuration of the display device 50 will be described. The display device 50 displays an image corresponding to image data input from the image processing apparatus 40. The display device 50 is constituted by a display panel made of liquid crystal, organic electro luminescence (EL), or the like.

In the imaging system 1 having the configuration as described above, the image processing apparatus 40 acquires each of the image data and the correction coefficient from the imaging apparatus 10, calculates the correction amount for correcting a pixel value of a pixel of interest of the image data using the acquired correction coefficient, and then corrects the pixel value of the pixel of interest using the correction amount. Thereafter, the display device 50 displays an image corresponding to the image data subjected to the image processing by the image processing apparatus 40.

<Process performed by Image Processing Apparatus>

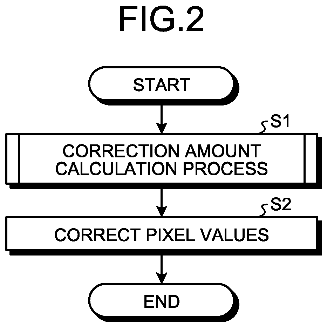

Next, a process performed by the image processing apparatus 40 will be described. FIG. 2 is a flowchart illustrating an outline of a process performed by the image processing apparatus 40, and illustrates a main routine.

As illustrated in FIG. 2, first, the correction amount calculating unit 441 performs a correction amount calculation process for acquiring image data generated by the imaging element 105 and a correction coefficient recorded by the correction coefficient recording unit 113b from the imaging apparatus 10, and calculating a correction amount of a pixel value of a pixel of interest in the acquired image data (Step S1). In this case, it is assumed that the correction amount is a signed value. Specifically, the correction amount is set to a negative value for a pixel whose spectral sensitivity is lower than the reference spectral sensitivity, and set to a positive value for a pixel whose spectral sensitivity is higher than the reference spectral sensitivity. Details of the correction amount calculation process will be described later. Here, if the positive and negative relationship of the correction amount is inverted, it is sufficient that addition and subtraction are inverted in subsequent processes using the correction coefficient, which will be described later.

Subsequently, the pixel value correcting unit 442 corrects a pixel value of each of pixels by subtracting the correction amount of each of the pixels calculated by the correction amount calculating unit 441 (Step S2). After Step S2, the image processing apparatus 40 terminates the process.

<Correction Amount Calculation Process>

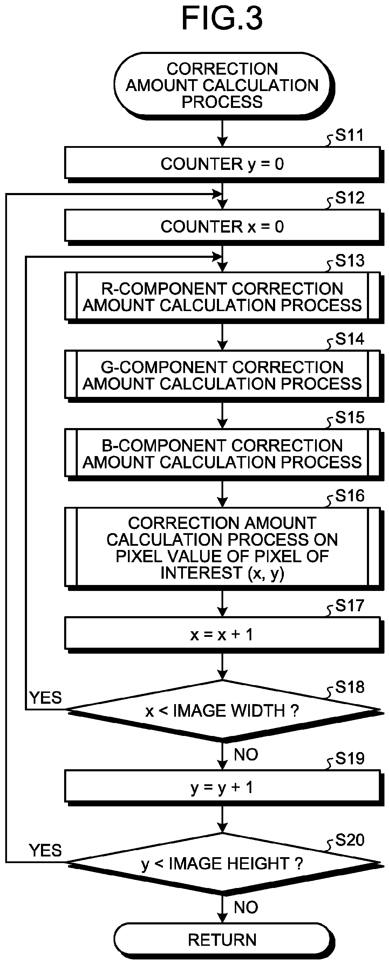

Next, details of the correction amount calculation process explained at Step S1 in FIG. 2 will be described. FIG. 3 is a flowchart illustrating an outline of the correction amount calculation process.

As illustrated in FIG. 3, first, the correction amount calculating unit 441 initializes a counter y (the counter y = 0), which indicates a position of a pixel in a height direction (vertical direction) of an image corresponding to the image data that is stored in the second buffer unit 422 of the second recording unit 42 (Step S11), and initializes a counter x (the counter x = 0), which indicates a position of the pixel in a width direction (horizontal direction) of the image corresponding to the image data (Step S12).

Subsequently, the correction amount calculating unit 441 performs an R-component correction amount calculation process for calculating a correction amount of an R component of a pixel value of a pixel of interest (x, y) (Step S13). Here, the R component is a pixel value that is generated upon reception of light in an R wavelength band. Details of the R-component correction amount calculation process will be described later.

Thereafter, the correction amount calculating unit 441 performs a G-component correction amount calculation process for calculating a correction amount of a G component of the pixel value of the pixel of interest (x, y) (Step S14). Here, the G component is a pixel value that is generated upon reception of light in a G wavelength band. Details of the G-component correction amount calculation process will be described later.

Subsequently, the correction amount calculating unit 441 performs a B-component correction amount calculation process for calculating a correction amount of a B component of the pixel value of the pixel of interest (x, y) (Step S15). Here, the B component is a pixel value that is generated upon reception of light in a B wavelength band. Details of the B-component correction amount calculation process will be described later.

Thereafter, the correction amount calculating unit 441 performs a correction amount calculation process for calculating a correction amount for the pixel value of the pixel of interest (x, y) based on the correction amounts of the R component, the G component, and the B component calculated through Step S13 to Step S15 described above (Step S16). Details of the correction amount calculation process on the pixel of interest (x, y) will be described later.

Subsequently, the correction amount calculating unit 441 increments the counter x (x = x + 1) (Step S17).

Thereafter, if the counter x is smaller than the width of the image corresponding to the image data (Step S18: Yes), the correction amount calculating unit 441 returns to Step S13. In contrast, if the counter x is not smaller than the width of the image corresponding to the image data (Step S18: No), the correction amount calculating unit 441 proceeds to Step S19 as described below.

At Step S19, the correction amount calculating unit 441 increments the counter y (y = y + 1).

Thereafter, if the counter y is smaller than the height of the image corresponding to the image data (Step S20: Yes), the image processing apparatus 40 returns to Step S12 described above. In contrast, if the counter y is not smaller than the height of the image corresponding to the image data (Step S20: No), the image processing apparatus 40 returns to the main routine in FIG. 2.

<R-component Correction Amount Calculation Process>

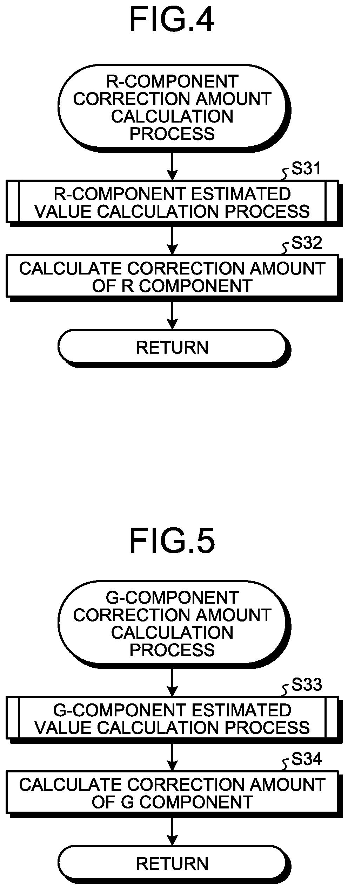

Next, details of the R-component correction amount calculation process explained at Step S13 in FIG. 3 will be described. FIG. 4 is a flowchart illustrating an outline of the R-component correction amount calculation process.

As illustrated in FIG. 4, the correction amount calculating unit 441 performs an R-component estimated value calculation process for calculating an estimated value of the R component of the pixel of interest (x, y)

(Step S31). Details of the R-component estimated value calculation process will be described later.

Subsequently, the correction amount calculating unit 441 calculates a correction amount of the R component of the pixel value of the pixel of interest (x, y) by multiplying the estimated value of the R-component of the pixel of interest (x, y) calculated at Step S31 described above by the correction coefficient of the R component of the pixel of interest (x, y) (Step S32). After Step S32, the image processing apparatus 40 returns to the sub routine of the correction amount calculation process in FIG. 3.

<G-component Correction Amount Calculation Process>

Next, details of the G-component correction amount calculation process explained at Step S14 in FIG. 3 will be described. FIG. 5 is a flowchart illustrating an outline of the G-component correction amount calculation process.

As illustrated in FIG. 5, the correction amount calculating unit 441 performs a G-component estimated value calculation process for calculating an estimated value of the G component of the pixel of interest (x, y) (Step S33). Details of the G-component estimated value calculation process will be described later.

Subsequently, the correction amount calculating unit 441 calculates a correction amount of the G component of the pixel value of the pixel of interest (x, y) by multiplying the estimated value of the G-component of the pixel of interest (x, y) calculated at Step S33 described above by the correction coefficient of the G component of the pixel of interest (x, y) (Step S34). After Step S34, the image processing apparatus 40 returns to the sub routine of the correction amount calculation process in FIG. 3.

<B-component Correction Amount Calculation Process>

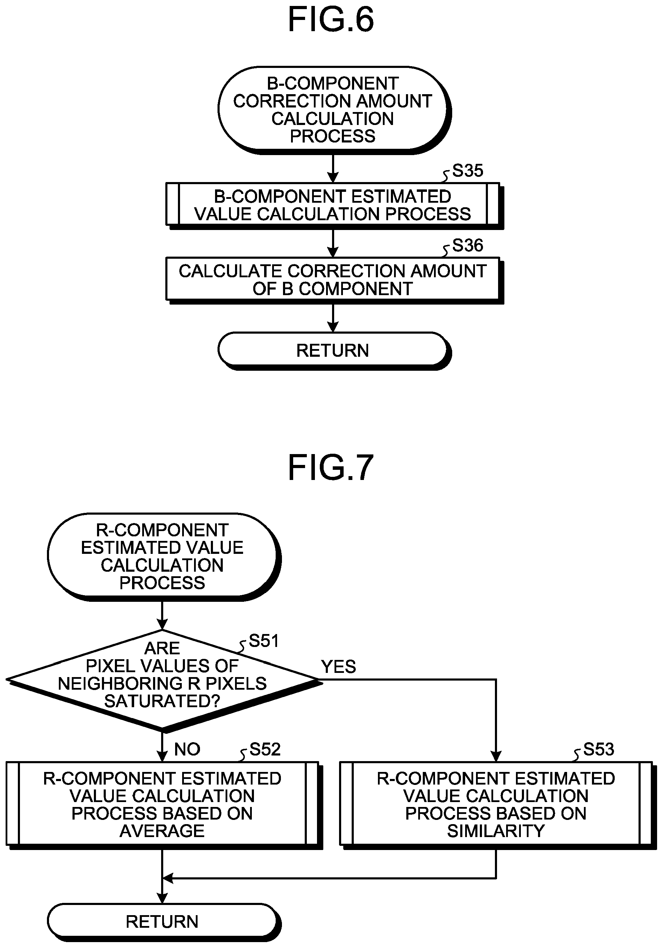

Next, details of the B-component correction amount calculation process explained at Step S15 in FIG. 3 will be described. FIG. 6 is a flowchart illustrating an outline of the B-component correction amount calculation process.

As illustrated in FIG. 6, the correction amount calculating unit 441 performs a B-component estimated value calculation process for calculating an estimated value of the B component of the pixel of interest (x, y) (Step S35). Details of the B-component estimated value calculation process will be described later.

Subsequently, the correction amount calculating unit 441 calculates a correction amount of the B component of the pixel value of the pixel of interest (x, y) by multiplying the estimated value of the B-component of the pixel of interest (x, y) calculated at Step S35 described above by the correction coefficient of the B component of the pixel of interest (Step S36). After Step S36, the image processing apparatus 40 returns to the sub routine of the correction amount calculation process in FIG. 3.

As described above with reference to FIG. 3 to FIG. 6, the correction amount calculating unit 441 calculates the correction amounts of all of the components for all of the pixels. However, it may be possible to calculate the correction amount for a pixel of a specific color and a specific color component.

<R-component Estimated Value Calculation Process>

Next, details of the R-component estimated value calculation process explained at Step S31 in FIG. 4 will be described. FIG. 7 is a flowchart illustrating an outline of the R-component estimated value calculation process.

As illustrated in FIG. 7, if the pixel values of the R pixels on the periphery of the pixel of interest (x, y) are not saturated (Step S51: No), the correction amount calculating unit 441 performs an R-component estimated value calculation process based on average, which is for calculating the estimated value of the R component based on an average value of pixel values of neighboring pixels of the pixel of interest (x, y) (Step S52). Details of the R-component estimated value calculation process based on average will be described later. After Step S52, the image processing apparatus 40 returns to the sub routine of the R-component correction amount calculation process in FIG. 4.

At Step S51, if the pixel values of the R pixels on the periphery of the pixel of interest (x, y) are saturated (Step S51: Yes), an R-component estimated value calculation process based on similarity is performed, which is for calculating the estimated value of the R component based on similarity to the pixel value of the pixel of interest (x, y) (Step S53). Details of the R-component estimated value calculation process based on similarity will be described later. After Step S53, the image processing apparatus 40 returns to the sub routine of the R-component correction amount calculation process in FIG. 4.

<R-component Estimated Value Calculation Process based on Average>

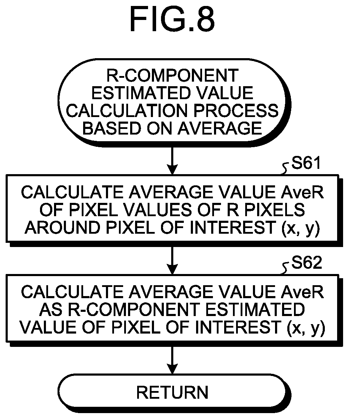

Next, details of the R-component estimated value calculation process based on average explained at Step S52 in FIG. 7 will be described. FIG. 8 is a flowchart illustrating an outline of the R-component estimated value calculation process based on average.

As illustrated in FIG. 8, first, the correction amount calculating unit 441 calculates an average value AveR of the pixel values of the R pixels on the periphery of the pixel of interest (x, y) (Step S61). Here, the periphery is a range of $M \times N$ pixels centered at the pixel of interest (x, y) (M and N are odd integers equal to or larger than three; however, M = N = 3 are excluded with respect to the R component and the B component). The correction amount calculating unit 441 may calculate the average value AveR with the inclusion of the pixel value of the pixel of interest (x, y). Further, the correction amount calculating unit 441 may calculate a different statistical value other than the average value. For example, the correction amount calculating unit 441 may calculate any of statistical values, such as a weighted average value, a median value, and an absolute value, except for a correction coefficient with the statistical values having predetermined values or larger.

Subsequently, the correction amount calculating unit 441 calculates the average value AveR calculated at Step S61 described above, as the R-component estimated value of the pixel of interest (x, y) (Step S62). After Step S62, the image processing apparatus 40 returns to the R-component estimated value calculation process in FIG. 7. In the first embodiment, it is possible to calculate the G-component estimated value and the B-component estimated value by performing a G-component estimated value calculation process based on average, which is included in the G-component estimated value calculation process at Step S33 in FIG. 5, and a B-component estimated value calculation process based on average, which is included in the B-component estimated value calculation process at Step S35 in FIG. 6, in the same manner as described above by replacing the R component with the G component and the B component, respectively; therefore, explanation of the G-component estimated value calculation process based on average and the B-component estimated value calculation process based on average will be omitted.

<R-component Estimated Value Calculation Process based on Similarity>

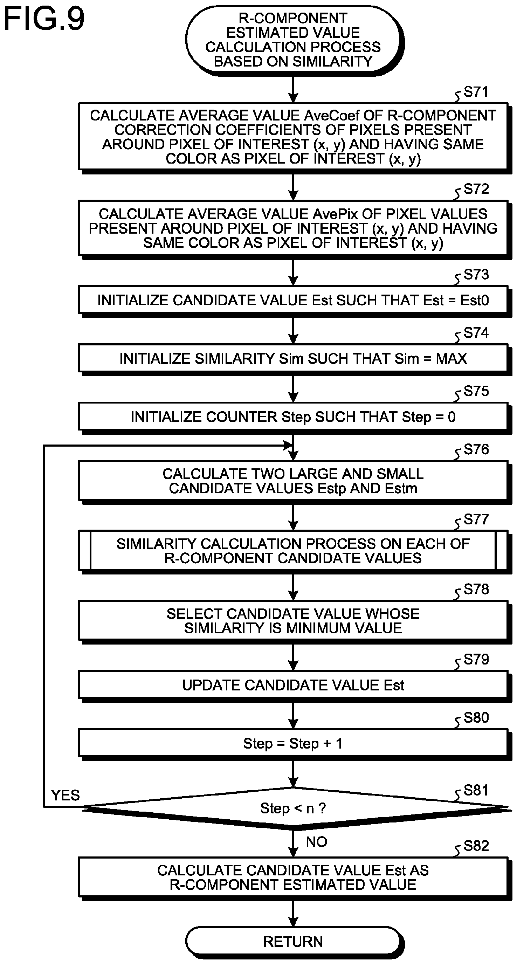

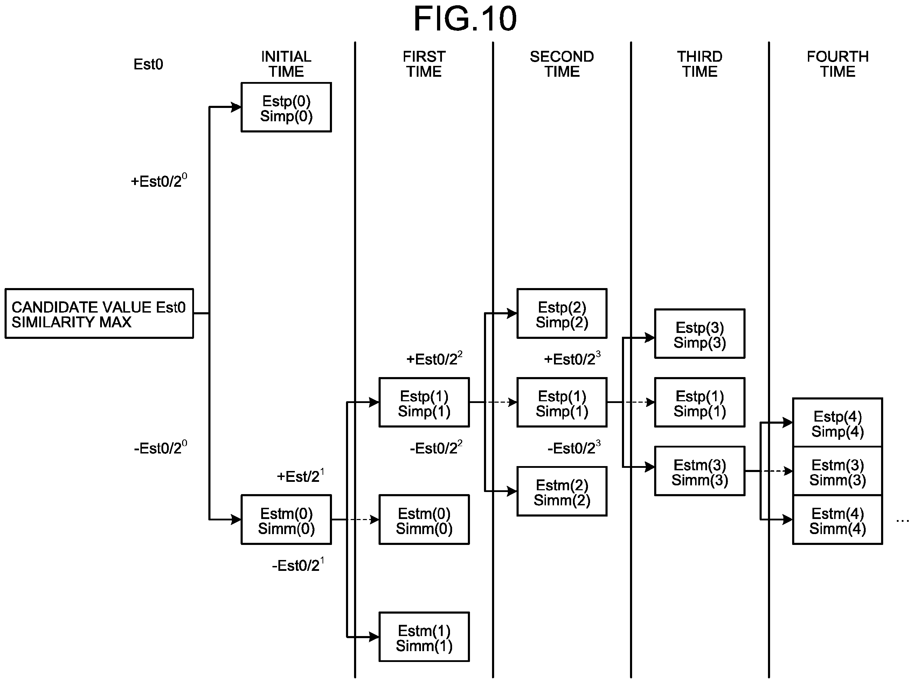

Next, details of the R-component estimated value calculation process based on similarity explained at Step S53 in FIG. 7 will be described. FIG. 9 is a flowchart illustrating an outline of the R-component estimated value calculation process based on similarity in FIG. 7. FIG. 10 is a diagram schematically illustrating a method of calculating the R-component estimated value by the correction amount calculating unit 441.

As illustrated in FIG. 9, first, the correction amount calculating unit 441 calculates an average value AveCoef of the R-component correction coefficients of same-color pixels that are present on the periphery of the pixel of interest (x, y) and that have the same color as the pixel of interest (x, y) (Step S71). In the following, the same-color pixels that are present on the periphery of the pixel of interest (x, y) and that have the same color as the pixel of interest (x, y) will be referred to as reference pixels. Further, the periphery indicates the same range used at Step S61 in FIG. 8 described above. In the first embodiment, the reference pixels function as neighboring same-color pixels.

Subsequently, the correction amount calculating unit 441 calculates an average value AvePix of pixel values of the same-color pixels that are present on the periphery of the pixel of interest (x, y) and that have the same color as the pixel of interest (x, y) (Step S72). In this case, the correction amount calculating unit 441 calculates the average value AvePix from the pixel values of the reference pixels as described above.

Thereafter, the correction amount calculating unit 441 initializes a candidate value Est (Est = Est0)

(Step S73). In this case, it is preferable for the correction amount calculating unit 441 to set the candidate value Est to a possible maximum value Est0 of pixel values that are input to the spectral sensitivity variation correcting unit 44.

Subsequently, the correction amount calculating unit 441 initializes a similarity Sim (Sim = Max) (Step S74). In this case, the correction amount calculating unit 441 sets a possible maximum value of the similarity Sim. Here, the similarity Sim is defined such that a value decreases with an increase in the similarity (the similarity is higher), and the value increases with a decrease in the similarity (the similarity is lower).

Thereafter, the correction amount calculating unit 441 initializes a counter Step to zero (Step =0) (Step S75) .

Subsequently, the correction amount calculating unit 441 calculates two large and small candidate values Estp and Estm (Step S76). Specifically, as illustrated in FIG. 10, the correction amount calculating unit 441 calculates the two large and small candidate values Estp and Estm with respect to the candidate value Est by Equation (1) and Equation (2) below.

$$\mathrm{Estp} = \mathrm{Est} + (\mathrm{Est0} / 2^{\mathrm{Step}}) \qquad\qquad (1)$$

$$\mathrm{Estm} = \mathrm{Est} - (\mathrm{Est0} / 2^{\mathrm{Step}}) \qquad\qquad (2)$$

Thereafter, the correction amount calculating unit 441 performs a similarity calculation process on each of R-component candidate values to calculate a similarity of the estimated value of each of the R components (Step S77) .

<Similarity Calculation Process on Each R-component Estimated Value>

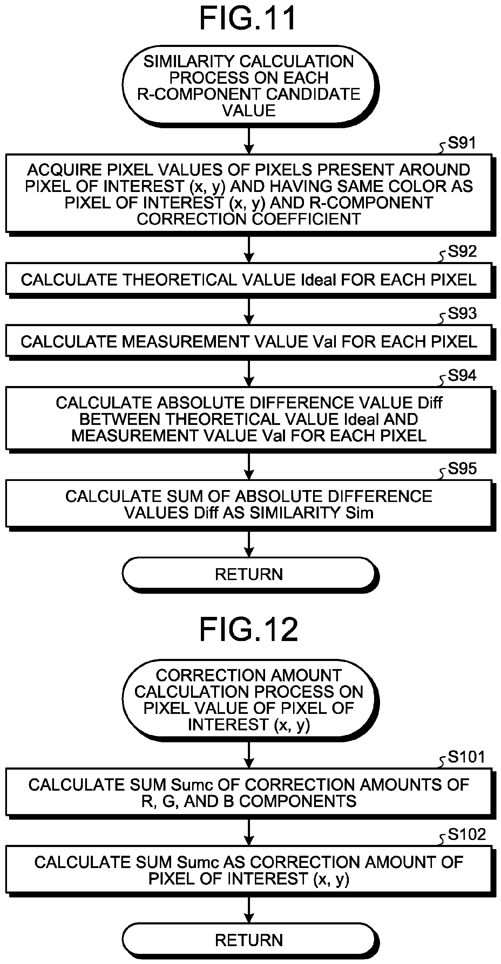

FIG. 11 is a flowchart illustrating an outline of the similarity calculation process on each of the R-component candidate values explained at Step S77 in FIG. 9.

As illustrated in FIG. 11, first, the correction amount calculating unit 441 acquires pixel values of the same-color pixels, which are present on the periphery of the pixel of interest (x, y) and which have the same color as the pixel of interest (x, y), and the R-component correction coefficient from the second buffer unit 422 (Step S91). Specifically, the correction amount calculating unit 441 acquires the pixel values of the reference pixels and the R-component correction coefficient from the second buffer unit 422.

Subsequently, the correction amount calculating unit 441 calculates a theoretical value Ideal for each of the pixels (Step S92). Specifically, the correction amount calculating unit 441 calculates, as a theoretical value Ideal(x+$\Delta$x, y+$\Delta$y), a value by multiplying a difference between an R-component correction coefficient CoefR(x+$\Delta$x, y+$\Delta$y) and the average value AveCoef of the R-component correction coefficients calculated at Step S71 in FIG. 9 described above by the R-component candidate value Est for each pixel in the reference pixels (x+$\Delta$x, y+$\Delta$y) acquired at Step S91 described above. More specifically, the correction amount calculating unit 441 calculates the theoretical value Ideal(x+$\Delta$x,

y+∆y) for each of the pixels based on Equation (3) below.

$$\text{Ideal}(x+\Delta x,\ y+\Delta y)$$
$$= (\text{CoefR}(x+\Delta x,\ y+\Delta y)\ -\ \text{AveCoef})\ \times\text{Est} \tag{3}$$

Thereafter, the correction amount calculating unit 441 calculates a measurement value Val for each of the pixels (Step S93). Specifically, the correction amount calculating unit 441 calculates, for each pixel in the reference pixels (x+∆x, y+∆y), a difference between a pixel value Pix(x+∆x, y+∆y) and the average value AvePix of the pixel values calculated at Step S72 in FIG. 9 as a measurement value Val(x+∆x, y+∆y). More specifically, the correction amount calculating unit 411 calculates the measurement value Val(x ∆x, y+∆y) for each of the pixels based on Equation (4) below.

$$\text{Val}(x+\Delta x,\ y+\Delta y)\ =\ \text{Pix}(x+\Delta x,\ y+\Delta y)\ -\ \text{AvePix} \tag{4}$$

Subsequently, the correction amount calculating unit 441 calculates an absolute difference value Diff between the theoretical value Ideal and the measurement value Val for each of the pixels (Step S94). Specifically, the correction amount calculating unit 441 calculates an absolute difference value Diff(x+∆x, y+∆y) between the theoretical value Ideal(x+∆x, y+∆y) and the measurement value Val(x+∆x, y+∆y) for each of the pixels (x+∆x, y+∆y). More specifically, the correction amount calculating unit 441 calculates the absolute difference value Diff(x+∆x, y+∆y) for each of the pixels based on Equation (5) below.

$$\text{Diff}(x+\Delta x,\ y+\Delta y)$$
$$= |(\text{Val}(x+\Delta x,\ y+\Delta y)\ -\ \text{Ideal}(x+\Delta x,\ y+\Delta y)| \tag{5}$$

The correction amount calculating unit 441 may calculate a squared difference value as the value Diff(x+∆x, y+∆y) by Equation (6) below, instead of the absolute difference value Diff(x+∆x, y+∆y).

$$\text{Diff}(x+\Delta x,\ y+\Delta y)$$
$$= ((\text{Val}(x+\Delta x,\ y+\Delta y)\ -\ \text{Ideal}(x+\Delta x,\ y+\Delta y))^2 \tag{6}$$

Thereafter, the correction amount calculating unit 441 calculates a sum value of the absolute difference values Diff of all of the reference pixels as the similarity Sim (Step S95). The correction amount calculating unit 441 may calculate a weighted sum instead of a simple sum of the absolute difference values of all of the reference pixels. For example, when performing weighting, the correction amount calculating unit 441 may calculate a sum of the absolute difference values of all of the reference pixels while changing a weight coefficient depending on a distance to each of the pixels from the pixel of interest (x, y). Further, when performing weighting, the correction amount calculating unit 441 may calculate a sum of the absolute difference values of all of the reference pixels while changing a weight coefficient such that the weight is increased with an increase in the absolute difference value Diff (which is equivalent to calculating a sum of the absolute difference values while converting the absolute difference values Diff using a monotonically increasing function). After Step S95, the image processing apparatus 40 returns to the R-component estimated value calculation process based on similarity in FIG. 9.

In this manner, the correction amount calculating unit 441 employs the degree of similarity between the distribution of the pixel values and the distribution of the theoretical values by employing the sum of the absolute difference values or the squared difference values as an evaluation value in the similarity calculation process on each of the R-component estimated values; however, the evaluation value may be calculated by other methods. For example, the correction amount calculating unit 441 may calculate the evaluation value by using normalized cross-correlation (NCC), zero-mean normalized cross-correlation (ZNCC), or the like. As for the G component and the B component, it is possible to calculate the similarity for the estimated value of each of the G components and the similarity for the estimated value of each of the B components by performing the same process as described above by replacing the R component with the G component and the B component; therefore, explanation of the similarity calculation process on each of the G-component estimated values and the similarity calculation process on each of the B-component estimated values will be omitted. This process is performed for each of the candidate values Est, Estp, and Estm to calculate three similarities Sim, Simp, and Simm.

Referring back to FIG. 9, explanation from Step S78 will be described.

At Step S78, the correction amount calculating unit 441 selects the candidate value whose similarity is the minimum value (the most similar candidate value). Specifically, the correction amount calculating unit 441 calculates (selects) the candidate value (any of Est, Estp, and Estm) corresponding to the lowest similarity from among the three similarities Sim, Simp, and Simm. Specifically, as illustrated in FIG. 10, the correction amount calculating unit 441 selects the candidate value having the minimum value while comparing three similarities, such as the two large and small similarities and the current similarity, and repeats this process to search for the candidate value whose similarity is the minimum value. After Step S78, the image processing apparatus 40 proceeds to Step S79.

At Step S79, the correction amount calculating unit 441 updates the candidate value calculated at Step S78 with the candidate value Est. For example, if the candidate value calculated at Step S78 is Estp, the correction amount calculating unit 441 sets Est to Estp (Est = Estp).

Thereafter, the correction amount calculating unit 441 increments the counter Step (Step = Step + 1) (Step S80).

Subsequently, if the counter Step is smaller than n (Step < n) (Step S81: Yes), the image processing apparatus 40 returns to Step S76 described above. In contrast, if the counter Step is not smaller than n (Step S81: No), the image processing apparatus 40 proceeds to Step S82. Here, it is preferable that n is set such that $Est0 / 2^n$ becomes equal to or larger than one.

At Step S82, the correction amount calculating unit 441 outputs the candidate value Est as the R-component estimated value. After Step S82, the image processing apparatus 40 returns to the R-component estimated value calculation process in FIG. 7.

As described above, according to the R-component estimated value calculation process based on similarity, the pixel values of the different-color pixels that are present on the periphery of the pixel of interest are not used; therefore, even when the different-color pixels are saturated, the correction amount calculating unit 441 can calculate an estimated value of a color component that is different from the pixel of interest in the pixel of interest.

Further, in the first embodiment, the correction amount calculating unit 441 selects the candidate value having the minimum value while comparing the three similarities, such as the two large and small similarities and the current similarity, and repeats this process to search for the candidate value whose similarity is the minimum value in the R-component estimated value calculation process based on similarity. With this operation, the correction amount calculating unit 441 does not use the pixel values of the different-color pixels that are present on the periphery of the pixel of interest, so that even when the different-color pixels are saturated, it is possible to calculate an estimated value of a color component that is different from the pixel of interest in the pixel of interest. The correction amount calculating unit 441 may search for a candidate value having the highest similarity by other methods. For example, the correction amount calculating unit 441 may employ a method of searching for a value having the highest similarity by comprehensively distributing the candidate values, a well-known hill climbing method, a local search method, or the like. Further, as for a G-component estimated value calculation process based on similarity, which is included in the G-component estimated calculation process at Step S33 in FIG. 5, and a B-component estimated value calculation process based on similarity, which is included in the B-component estimated calculation process at Step S35 in FIG. 6, it is possible to calculate the G-component estimated value and the B-component estimated value by performing the same process as described above by replacing the R component with the G component and the B component; therefore, explanation of the G-component estimated value calculation process based on similarity and the B-component estimated value calculation process based on similarity will be omitted.

<Correction Amount Calculation Process on Pixel Value of Pixel of Interest (x, y)>

Next, the correction amount calculation process on the pixel value of the pixel of interest (x, y) explained at Step S16 in FIG. 3 will be described. FIG. 12 is a flowchart illustrating an outline of the correction amount calculation process on the pixel value of the pixel of interest (x, y).

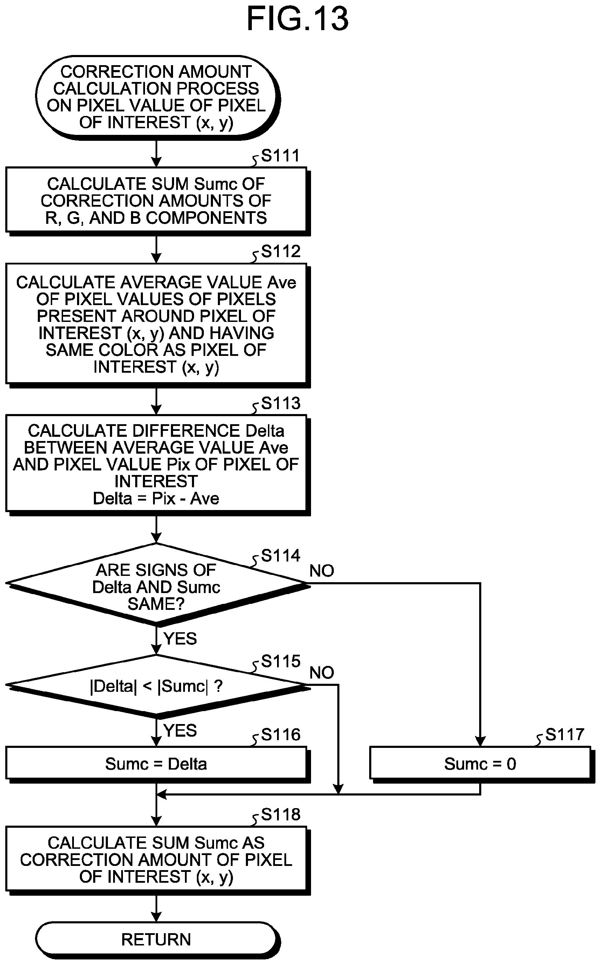

As illustrated in FIG. 13, first, the correction amount calculating unit 441 calculates a sum value Sumc of the correction amounts of the R component, the G component, and the B component calculated at Step S13, Step S14, and Step S15, respectively, in FIG. 3 (Step S101).

Subsequently, the correction amount calculating unit 441 calculates the sum value Sumc calculated at Step S101 described above as the correction amount of the pixel of interest (x, y) (Step S102). After Step S102, the image processing apparatus 40 returns to the correction amount calculation process in FIG. 3.

According to the first embodiment of the present invention as described above, when the pixel values of the different-color pixels are saturated, the correction amount calculating unit 441 calculates similarities from the candidate values, from the theoretical values of pixel values of neighboring same-color pixels that are present on the periphery of the pixel of interest (x, y) and that are calculated based on correction coefficients of the respective pixels of the neighboring same-color pixels for which color filters having the same color as the color filter arranged on the pixel of interest (x, y) are arranged, and from the measurement values of the pixel values of the neighboring same-color pixels; and calculates a candidate value with a high similarity as the estimated value. In contrast, when the pixel values of the different-color pixels are not saturated, the correction amount calculating unit 441 calculates the estimated value of the color component to be corrected in the pixel of interest (x, y) by using the pixel values of the respective pixels of the neighboring pixels including the neighboring same-color pixels that are present on the periphery of the pixel of interest (x, y). Therefore, even when the different-color pixels are saturated, the correction amount calculating unit 441 can calculate the estimated value of a color component that is different from the pixel of interest in the pixel of interest (x, y). Consequently, it is possible to perform correction by taking into account the conditions of the neighboring pixels. As a result, it is possible to correct variation in the spectral sensitivity with high accuracy.

(Modification of First Embodiment)

Next, a modification of the first embodiment of the present invention will be described. In the modification of the first embodiment, an imaging system has the same configuration as that of the imaging system 1 according to the first embodiment described above, but an image processing apparatus performs a different correction amount calculation process on a pixel value of a pixel of interest (x, y). Specifically, in the modification of the first embodiment, overcorrection and erroneous correction are prevented. In the following, the correction amount calculation process performed on the pixel value of the pixel of interest (x, y) by the image processing apparatus according to the modification of the first embodiment will be described. The same components as those of the imaging system 1 according to the first embodiment described above are denoted by the same reference signs, and explanation thereof will be omitted.

<Correction Amount Calculation Process on Pixel

Value of Pixel of Interest (x, y)>

FIG. 13 is a flowchart illustrating an outline of the correction amount calculation process on the pixel value of the pixel of interest (x, y), which is performed by the image processing apparatus according to the modification of the first embodiment.

As illustrated in FIG. 13, first, the correction amount calculating unit 441 calculates a sum value Sumc of the correction amounts of the R component, the G component, and the B component calculated at Step S13, Step S14, and Step S15, respectively, in FIG. 3 (Step S111).

Subsequently, the correction amount calculating unit 441 calculates an average value Ave of pixel values of same-color pixels that are present on the periphery of the pixel of interest (x, y) and that have the same color as the pixel of interest (x, y) (Step S112). In this case, it is preferable that the correction amount calculating unit 441 uses the same pixels as the same-color pixels for which the average value Ave is calculated at Step S72 in FIG. 9.

Thereafter, the correction amount calculating unit 441 calculates a difference Delta between the average value Ave calculated at Step S112 and the pixel value Pix of the pixel of interest (x, y) (Delta = Pix - Ave) (Step S113) .

Subsequently, if the signs of the difference Delta and the sum value Sumc are the same (Step S114: Yes), and if it is determined that |Delta| < |Sumc| (Step S115: Yes), the correction amount calculating unit 441 sets the sum value Sumc to the difference Delta (Sumc = Delta) (Step S116). After Step S116, the image processing apparatus 40 proceeds to Step S118 to be described later.

At Step S114, if the signs of the difference Delta and the sum value Sumc are the same (Step S114: Yes), and if it is not determined that |Delta| < |Sumc| (Step S115: No), the image processing apparatus 40 proceeds to Step S118 to be described later.

At Step S114, if the signs of the difference Delta and the sum value Sumc are not the same (Step S114: No), the correction amount calculating unit 441 sets the sum value Sumc to "0" (Sumc = 0) (Step S117). After Step S117, the image processing apparatus 40 proceeds to Step S118 to be described later.

Subsequently, the correction amount calculating unit 441 calculates the sum value Sumc as the correction amount of the pixel of interest (x, y) (Step S118). After Step S118, the image processing apparatus 40 returns to the correction amount calculation process in FIG. 3.

According to the modification of the first embodiment of the present invention as described above, when the sings of the difference Delta and the sum value Sumc are not the same, the correction amount calculating unit 441 sets the sum value Sumc to "0", and, when the sings of the difference Delta and the sum value Sumc are the same and if it is determined that |Delta| < |Sumc|, the correction amount calculating unit 441 sets the sum value Sumc to the difference "Delta". Therefore, it is possible to prevent overcorrection and erroneous correction.

In the modification of the first embodiment of the present invention, the corrected pixel value is limited between the pixel value Pix and the average value Ave by comparing the sign of the difference Delta and the sign of the sum value Sumc and determining whether |Delta| < |Sumc|; however, other methods may be employed. For example, when Ave < Pix, the correction amount calculating unit 441 may clip the value obtained by subtracting the sum value Sumc from the pixel value Pix so as to be equal to or larger than the average value Ave and equal to or smaller than the pixel value Pix, and, when Ave ≥ Pix, the correction amount calculating unit 441 may clip the value obtained by subtracting the sum value Sumc from the pixel value Pix so as to be equal to or larger than the pixel value Pix and equal to or smaller than the average value Ave.

(Second Embodiment)

Next, a second embodiment of the present invention will be described. An imaging system according to the second embodiment has the same configuration as the imaging system 1 according to the first embodiment described above, but an image processing apparatus performs a different estimated value calculation process. Specifically, in the first embodiment described above, the correction amount calculating unit changes the method of calculating the estimated value depending on whether neighboring pixel values are saturated as a predetermined condition; however, in the second embodiment, the correction amount calculating unit changes the method of calculating the estimated value depending on flatness of neighboring pixels as a predetermined condition. The same components as those of the imaging system 1 according to the first embodiment described above are denoted by the same reference signs, and explanation thereof will be omitted. Further, in the following description, processes on the R component will be described, and the same processes are also performed on the G component and the B component; therefore, explanation of the processes on the G component and the B component will be omitted.

<R-component Estimated Value Calculation Process>

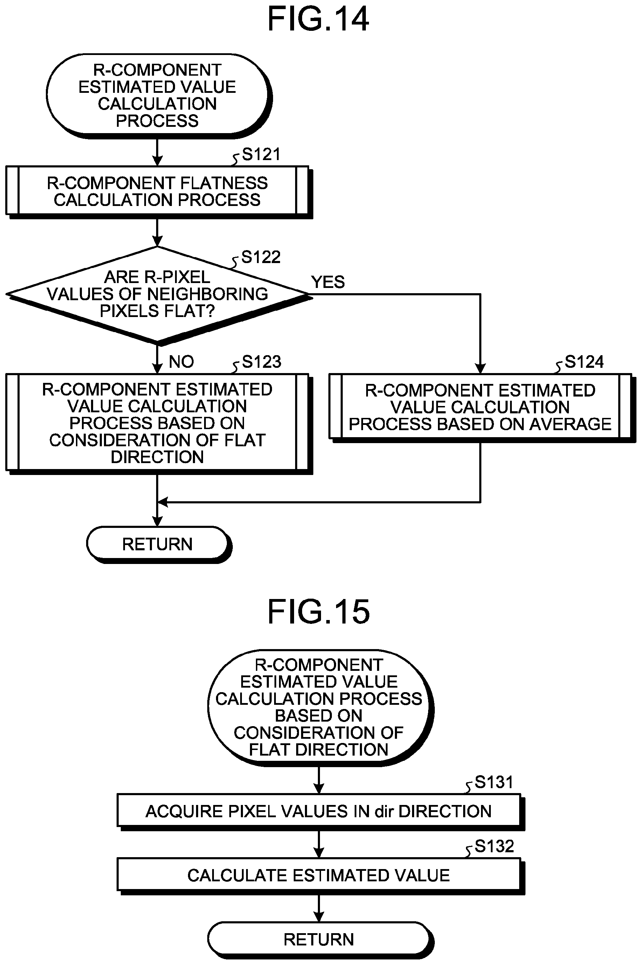

FIG. 14 is a flowchart illustrating an outline of an R-component estimated value calculation process performed by the image processing apparatus 40 according to the second embodiment.
As illustrated in FIG. 14, first, the correction amount calculating unit 441 performs an R-component flatness calculation process for calculating flatness of R components (Step S121). Details of the R-component flatness calculation process will be described later.
Subsequently, the correction amount calculating unit 441 determines whether the R pixel values of the neighboring pixels calculated at Step S121 are larger than a threshold set in advance, and determines whether the R pixel values of the neighboring pixels are flat (Step S122). Here, the neighboring pixels are pixels that are present on the periphery of the pixel of interest (x, y) (for example, in a range of m × n centered at the pixel of interest). Further, the threshold may be appropriately set depending on conditions. If the R pixel values of the neighboring pixels are not flat (Step S122: No), the image processing apparatus 40 proceeds to Step S123 to be described later. In contrast, if the R pixel values of the neighboring pixels are flat (Step S122: Yes), the image processing apparatus 40 proceeds to Step S124 to be described later.
At Step S123, the correction amount calculating unit 441 performs an R-component estimated value calculation process based on consideration of a flat direction for calculating an estimated value of the R component by taking into account the flat direction. Details of the R-component estimated value calculation process based on consideration of the flat direction will be described later. After Step S123, the image processing apparatus 40 returns to the R-component correction amount calculation process in FIG. 4.
At Step S124, the correction amount calculating unit 441 performs the R-component estimated value calculation process based on average (see FIG. 8 described above). After Step S124, the image processing apparatus 40 returns to the R-component correction amount calculation process in FIG. 4.

<R-component Estimated Value Calculation Process based on Consideration of Flat Direction>

Next, details of the R-component estimated value calculation process based on consideration of the flat direction explained at Step S123 in FIG. 14 will be described. FIG. 15 is a flowchart illustrating an outline of the R-component estimated value calculation process based on consideration of the flat direction.
As illustrated in FIG. 15, first, the correction amount calculating unit 441 acquires the pixel values in a dir direction calculated in the R-component flatness calculation process performed at Step S121 described above (Step S131).
Subsequently, the correction amount calculating unit 441 calculates the average value of the image values acquired at Step S131 as the estimated value (Step S132). The correction amount calculating unit 441 may calculate a different statistical value other than the average value as the estimated value. For example, the correction amount calculating unit 441 may calculate, as the estimated value, any of statistical values, such as a weighted average value, a median value, and an absolute value, except for a correction coefficient with the statistical values having predetermined values or larger. After Step S132, the image processing apparatus 40 returns to the R-component estimated value calculation process in FIG. 14.

<R-component Flatness Calculation Process>

Next, details of the R-component flatness calculation process explained at Step S121 in FIG. 14 will be described.

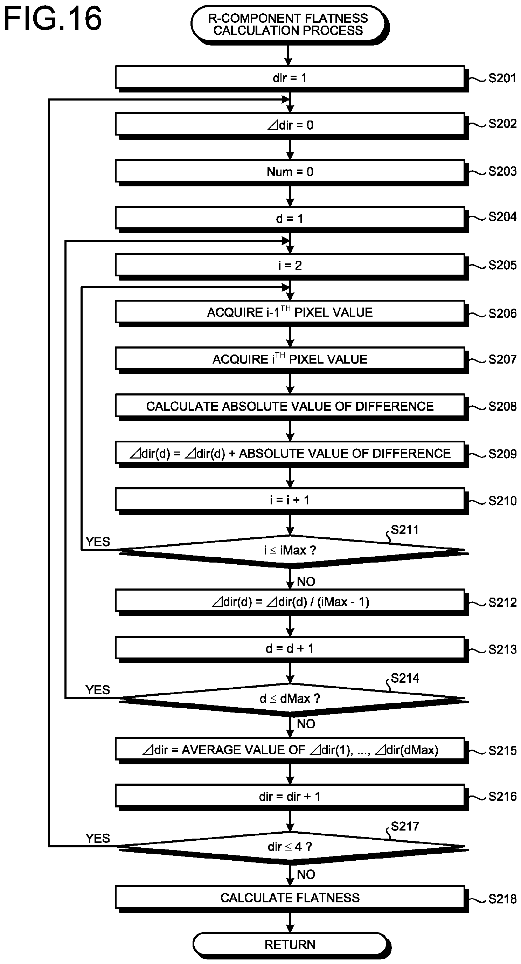

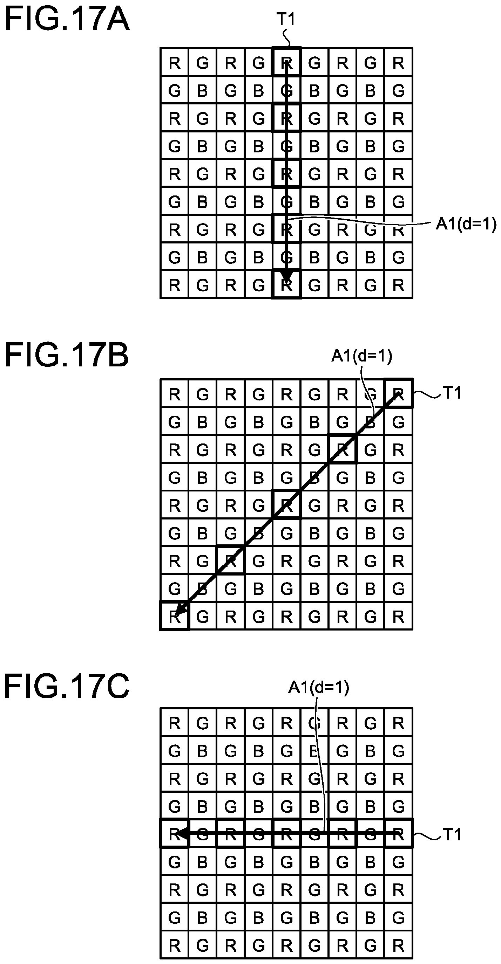

FIG. 16 is a flowchart illustrating an outline of the R-component flatness calculation process. FIG. 17A to FIG. 17P are diagrams illustrating an example of determination of a direction of the R components by the correction amount calculating unit 441.

As illustrated in FIG. 16, first, the correction amount calculating unit 441 initializes a variable dir (dir = 1) indicating a direction for calculating a degree of correlation (Step S201).

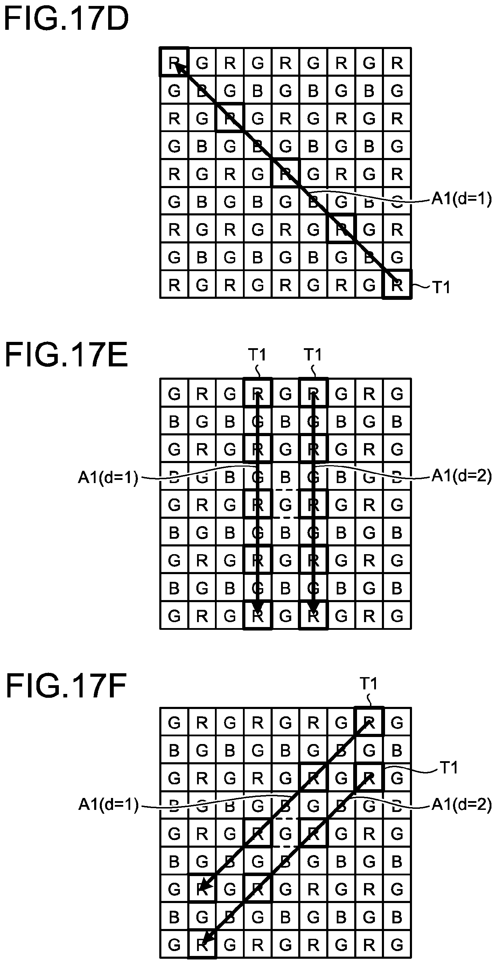

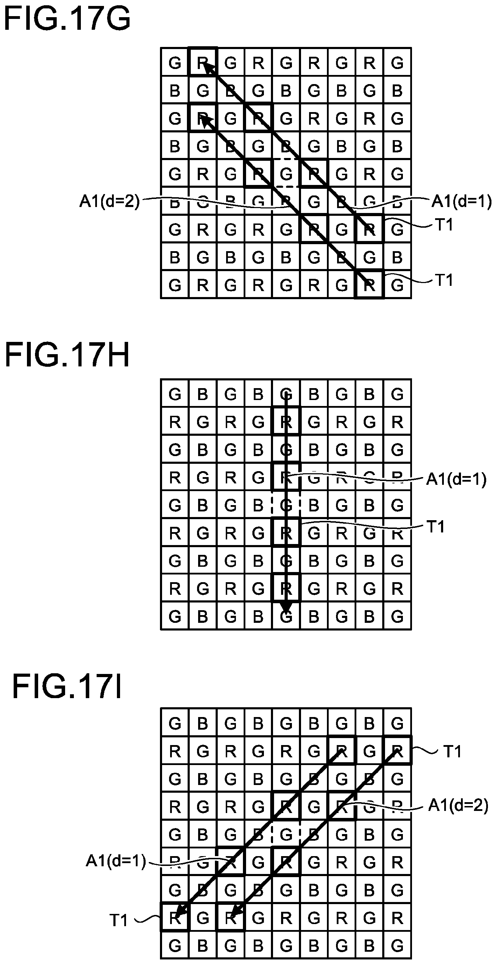

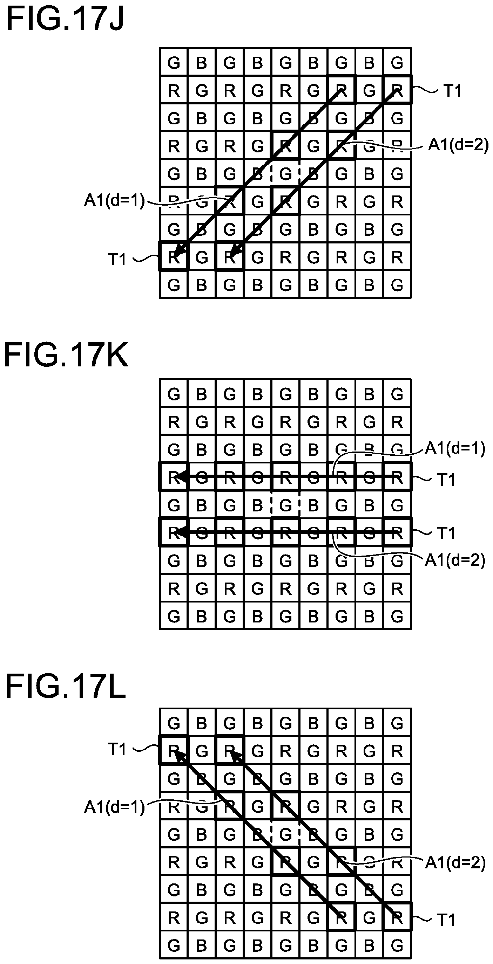

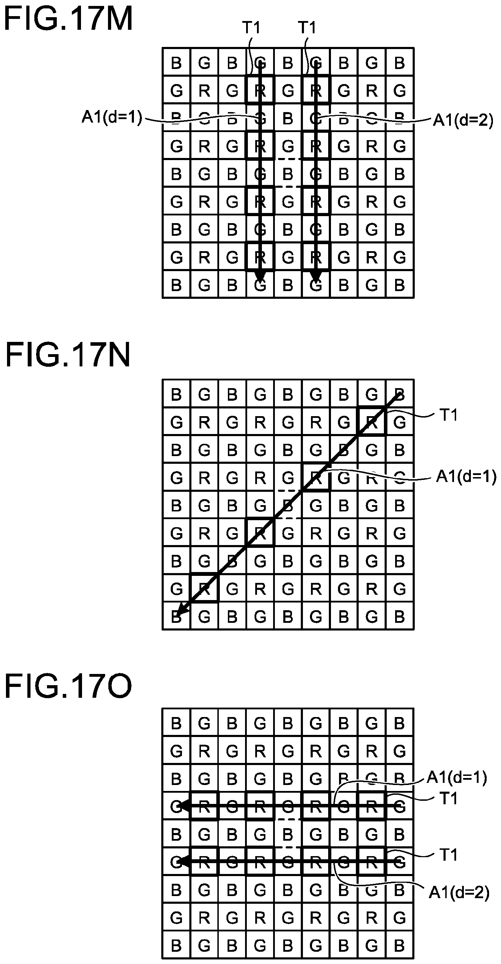

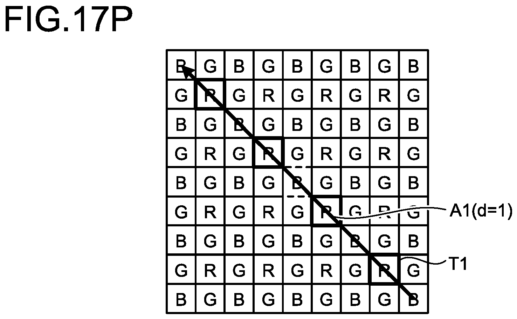

FIG. 17A to FIG. 17P are diagrams schematically illustrating examples of the direction in which the correction amount calculating unit 441 calculates flatness of R components in an image. In the examples, FIG. 17A, FIG. 17E, FIG. 17I, and FIG. 17M correspond to directions in which the variable dir is 1; FIG. 17B, FIG. 17F, FIG. 17J, and FIG. 17N correspond to directions in which the variable dir is 2; FIG. 17C, FIG. 17G, FIG. 17K, and FIG. 17O correspond to directions in which the variable dir is 3; and FIG. 17D, FIG. 17H, FIG. 17L, and FIG. 17P correspond to directions in which the variable dir is 4. Further, FIG. 17A to FIG. 17D illustrate cases in which the pixel of interest is an R pixel, FIG. 17E to FIG. 17H illustrate a case in which the pixel of interest is a G (Gr) pixel, FIG. 17I to FIG. 17L illustrate cases in which the pixel of interest is a G (Gb) pixel, and FIG. 17M to FIG. 17P illustrate cases in which the pixel of interest is a B pixel. Furthermore, in FIG. 17A to FIG. 17P, thick frames T1 indicate pixels used for the direction determination, and an arrow A1 indicates the direction.

Moreover, in FIG. 17A to FIG. 17P, a pixel that is located closest to a start point of an arrow A1 and that is used for the direction determination is defined as a first pixel, a pixel that is secondly used for the direction determination along the arrow A1 is defined as a second pixel, and subsequent pixels are defined similarly. As illustrated in FIG. 17A to FIG. 17P, in the second embodiment, the correction amount calculating unit 441 performs the direction determination in the range of $9 \times 9$ pixels centered at the pixel of interest, employs four directions such as a vertical direction, a horizontal direction, and oblique directions, and determines a direction from pixels on a line (arrow) that passes through a same-color pixel, which has the same color as a target component and which is located so as to intersect with or adjacent to the pixel of interest, for each of the directions. Therefore, in the second embodiment, the number represented by dir is equal to or larger than 1 and equal to or smaller than 4. In the second embodiment, it is possible to determine a direction in a range other than the range of $9 \times 9$ pixels or determine a direction from directions other than the above-described four directions.

Subsequently, the correction amount calculating unit 441 initializes a variable $\Delta$dir, which indicates the degree of correlation in the dir direction, to zero ($\Delta$dir = 0) (Step S202), and initializes a counter that counts the number added to $\Delta$dir to zero (Num = 0) (Step S203).

Thereafter, the correction amount calculating unit 441 initializes a counter d that indicates a line for obtaining the degree of correlation (d = 1) (Step S204), and initializes a counter i indicating a pixel for obtaining the degree of correlation (i = 2) (Step S205).

Subsequently, the correction amount calculating unit 441 acquires a pixel value of an i-1$^{th}$ pixel on a d-line in the dir direction (for example, pixels used for the direction determination are defined as a first pixel, a second pixel, ..., and an iMax$^{th}$ pixel starting from the pixel located closest to the start point of the arrow A1 in each of the directions 1 to 4 in FIGS. 17) (Step S206). The correction amount calculating unit 441 copies the acquired pixel value of the i-1$^{th}$ pixel to a variable Prevl.

Thereafter, the correction amount calculating unit 441 acquires a pixel value of an i$^{th}$ pixel on the d-line in the dir direction from the second buffer unit 422 (Step S207). The correction amount calculating unit 441 copies the acquired pixel value of the i$^{th}$ pixel to a variable Curr.

Subsequently, the correction amount calculating unit 441 calculates an absolute value of a difference between the variable Prevl and the variable Curr (Step S208) .

Thereafter, the correction amount calculating unit 441 adds the absolute value of the difference calculated at Step S208 to a variable $\Delta$dir(d) ($\Delta$dir(d) = $\Delta$dir(d) + the absolute value of the difference) (Step S209).

Subsequently, the correction amount calculating unit 441 increments the counter i indicating a pixel for obtaining the degree of correlation (i = i + 1) (Step S210).

Thereafter, the correction amount calculating unit 441 determines whether the counter i indicating the pixel for obtaining the degree of correlation is equal to or smaller than iMax (Step S211). If the correction amount calculating unit 441 determines that the counter i is equal to or smaller than iMax (Step S211: Yes), the image processing apparatus 40 returns to Step S206 described above. In contrast, if the correction amount calculating unit 441 determines that the counter i is not equal to or smaller than iMax (Step S211: No), the image processing apparatus 40 proceeds to Step S212 as described below.

At Step S212, the correction amount calculating unit 441 calculates an average of the absolute values of the differences ($\Delta$dir(d) = $\Delta$dir(d) / (iMax-1)). In the second embodiment, the correction amount calculating unit 441 calculates the average value of the absolute values of the differences as an evaluation value, but the embodiments are not limited to this example, and it may be possible to use a value calculated by other calculation methods as the evaluation value. For example, the correction amount calculating unit 441 may use a difference between a maximum and a minimum of the target pixels present on the d-line as the evaluation value, or use a standard deviation of the target pixels present on the d-line as the evaluation value.

Subsequently, the correction amount calculating unit 441 increments the counter d indicating a line for obtaining the degree of correlation (d = d + 1) (Step S213).

Thereafter, the correction amount calculating unit 441 determines whether the counter d indicating a line for obtaining the degree of correlation is equal to or smaller than dMax (Step S214). Here, dMax is a numeral that depends on dir. Specifically, in FIG. 17A to FIG. 17P, dMax is equal to the number of arrows corresponding to the dir directions in the figures (for example, in FIG. 17E, dMax = 2). While it is assumed that dMax = 2 in FIG. 17A to FIG. 17P, dMax may be changed appropriately, and is preferably set to 2 or larger. If the correction amount calculating unit 441 determines that the counter d indicating a line for obtaining the degree of correlation is equal to or smaller than dMax (Step S214: Yes), the image processing apparatus 40 returns to Step S205 described above. In contrast, if the correction amount calculating unit 441 determines that the counter d indicating a line for obtaining the degree of correlation is not equal to or smaller than dMax (Step S214: No), the image processing apparatus 40 proceeds to Step S215 as described below.

At Step S215, the correction amount calculating unit 441 calculates an average value Δdir of the average values Δdir(d) of the differences calculated for each of the lines (1, 2, ..., dMax) (Δdir is an average value of Δdir(1), ..., Δdir(dMax)).

Subsequently, the correction amount calculating unit 441 increments the variable dir indicating the direction for calculating the degree of correlation (dir = dir + 1) (Step S216).

Thereafter, the correction amount calculating unit 441 determines whether the variable dir indicating the direction for calculating the degree of correlation is equal to or smaller than 4 (Step S217). If the correction amount calculating unit 441 determines that the variable dir indicating the direction for calculating the degree of correlation is equal to or smaller than 4 (Step S217: Yes), the image processing apparatus 40 returns to Step S202 described above. In contrast, if the correction amount calculating unit 441 determines that the variable dir indicating the direction for calculating the degree of correlation is not equal to or smaller than 4 (Step S217: No), the image processing apparatus 40 proceeds to Step S218 as described below.

At Step S218, the correction amount calculating unit 441 calculates flatness. Specifically, the correction amount calculating unit 441 calculates a difference between the maximum and the minimum of the above-described Δ1 to Δ4 as the flatness, and calculates the direction dir corresponding to Δdir that is the minimum among Δ1 to Δ4 as a flat direction dir. After Step S218, the image processing apparatus 40 returns to the R-component estimated value calculation process in FIG. 14.

According to the second embodiment of the present invention as described above, if the pixel values of the neighboring pixels are flat, the correction amount calculating unit 441 calculates an estimated value of the color component to be corrected in the pixel of interest by using the pixel values of the neighboring pixels present on the periphery of the pixel of interest (x, y) or calculates an estimated value of the color component to be corrected in the pixel of interest by using the pixel values of the neighboring pixels present on the periphery of the pixel of interest (x, y) and by using a correction coefficient. In contrast, if the pixel values of the neighboring pixels are not flat, the correction amount calculating unit 441 changes a pixel range to be referred to in accordance with an edge direction of the neighboring pixels, and calculates an estimated value of the color component to be corrected in the pixel of interest (x, y) by using the pixel values of the neighboring pixels of the pixel of interest or calculates an estimated value of the color component to be corrected in the pixel of interest (x, y) by using the pixel values of the neighboring pixels of the pixel of interest and by using the correction coefficient. That is, according to the second embodiment, the correction amount calculating unit 441 calculates the estimated value using pixels that are highly correlated with the pixel value of the pixel of interest (x, y). Therefore, even when an edge is present near the pixel of interest (x, y), it is possible to prevent erroneous calculation of the estimated value due to the influence of the edge. Consequently, it is possible to calculate the estimated value with high accuracy.

(Third Embodiment)

Next, a third embodiment of the present invention will be described. An imaging system according to the third embodiment has the same configuration as the imaging system 1 according to the first embodiment described above, but an image processing apparatus performs a different estimated value calculation process. Specifically, in the third embodiment, the correction amount calculating unit changes the method of calculating the estimated value (a reference range for calculating an estimated value) depending on a size of random noise (a size of the standard deviation of neighboring pixels) as a predetermined condition. The same components as those of the imaging system 1 according to the first embodiment described above are denoted by the same reference signs, and explanation thereof will be omitted. Further, in the following explanation, processes on the R component will be described, and the same processes are also performed on the G component and the B component; therefore, explanation of the processes on the G component and the B component will be omitted.

<R-component Estimated Value Calculation Process>

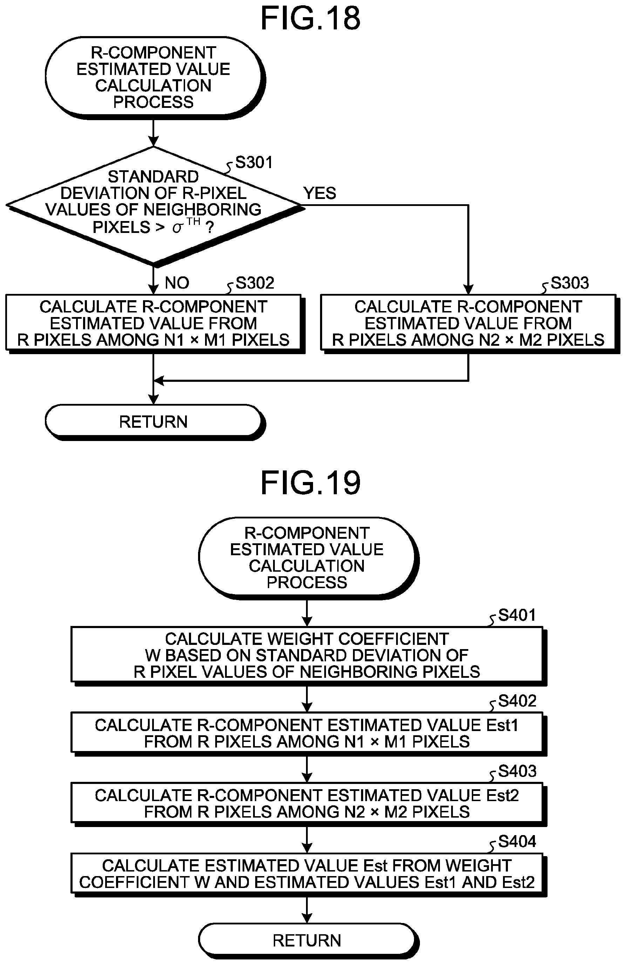

FIG. 18 is a flowchart illustrating an outline of an R-component estimated value calculation process performed by the image processing apparatus 40 according to the third embodiment.

As illustrated in FIG. 18, first, the correction amount calculating unit 441 calculates a standard deviation of pixel values of R pixels present on the periphery of the pixel of interest (x, y), and determines whether the standard deviation is larger than a threshold σth (Step S301). Here, the threshold σth may be changed appropriately in accordance with various conditions, such as the pixel of interest (x, y) or pixel values of neighboring pixels of the pixel of interest, for example. Further, the reason for calculating the standard deviation is to calculate the degree of occurrence of random noise in the neighboring pixels. If the correction amount calculating unit 441 determines that the standard deviation is larger than the threshold σth (Step S301: Yes), the image processing apparatus 40 proceeds to Step S303 to be described later. In contrast, if the correction amount calculating unit 441 determines that the standard deviation is not larger than the threshold σth (Step S301: No), the image processing apparatus 40 proceeds to Step S302 to be described later. The correction amount calculating unit 441 may use various statistics (for example, a width or an inter-quartile range of the distribution) capable of discriminating the degree of variation in the pixels, instead of the standard deviation.

At Step S302, the correction amount calculating unit 441 calculates an average value of R pixels among N1 × M1 pixels as an estimated value of an R component. The correction amount calculating unit 441 may calculate a different statistical value other than the average value as the estimated value. For example, the correction amount calculating unit 441 may calculate, as the estimated value, any of statistical values, such as a weighted average value, a median value, and an absolute value, except for a correction coefficient with the statistical values having predetermined values or larger. After Step S302, the image processing apparatus 40 returns to the R-component correction amount calculation process in FIG. 4.

At Step S303, the correction amount calculating unit 441 calculates an average value of R pixels among N2 × M2 pixels as an estimated value of an R component. The correction amount calculating unit 441 sets the ranges of N1 × M1 and N2 × M2 such that the total number of pixels of N2 × M2 becomes larger than the total number of pixels of N1 × M1 used at Step S302 described above ((total number of N1 × M1 pixels) < (total number of N2 × M2 pixels)). Further, the correction amount calculating unit 441 may calculate a different statistical value other than the average value as the estimated value. For example, the correction amount calculating unit 441 may calculate, as the estimated value, any of statistical values, such as a weighted average value, a median value, and an absolute value, except for a correction coefficient with the statistical values having predetermined values or larger. After Step S303, the image processing apparatus 40 returns to the R-component correction amount calculation process in FIG. 4.

According to the third embodiment of the present invention as described above, the correction amount calculating unit 441 changes the reference range for calculating the estimated value depending on the size of the standard deviation (random noise) of the neighboring pixels of the pixel of interest (x, y), and, if the variation is large, the reference range is increased and an average value is employed; therefore, it is possible to reduce the influence of variation to the estimated value. Consequently, it is possible to calculate the estimated value with high accuracy.

In the embodiment of the present invention, the correction amount calculating unit 441 changes the reference range for calculating the estimated value depending on the size of the standard deviation (random noise) of the neighboring pixels of the pixel of interest (x, y), but it may be possible to change a shape of the reference range for calculating the estimated value depending on the size of the standard deviation of the neighboring pixels of the pixel of interest (x, y), for example.

(Modification of Third Embodiment)

Next, a modification of the third embodiment of the present invention will be described. In the modification of the third embodiment, an imaging system has the same configuration as the imaging system 1 of the third embodiment described above, but an image processing apparatus performs a different estimated value calculation process. Specifically, in the modification of the third embodiment, a weight coefficient is calculated based on the standard deviation, and an estimated value is calculated using the weight coefficient. In the following, the estimated value calculation process performed by the image processing apparatus according to the modification of the third embodiment will be described. The same components as those of the imaging system 1 according to the third embodiment described above are denoted by the same reference signs, and explanation thereof will be omitted. Further, in the following description, processes on the R component will be described, and the same processes are also performed on the G component and the B component; therefore, explanation of the processes on the G component and the B component will be omitted.

<R-component Estimated Value Calculation Process>

FIG. 19 is a flowchart illustrating an outline of an R-component estimated value calculation process performed by the image processing apparatus 40 according to the modification of the third embodiment.

As illustrated in FIG. 19, first, the correction amount calculating unit 441 calculates a standard deviation $\sigma$ of pixel values of R pixels present on the periphery of the pixel of interest (x, y), and calculates a weight coefficient W based on the calculated standard deviation $\sigma$ (Step S401).

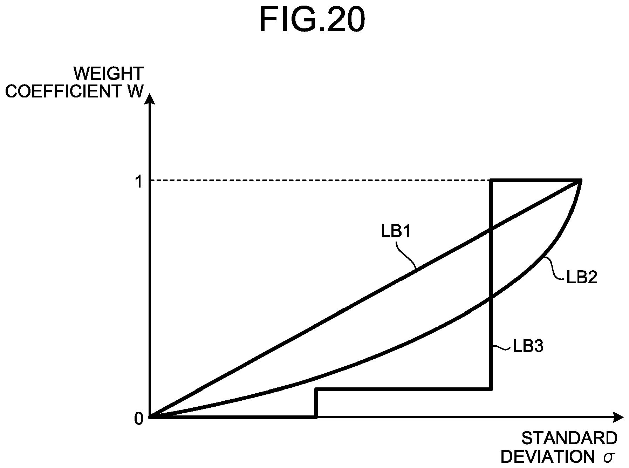

FIG. 20 is a diagram illustrating a relation between the standard deviation $\sigma$ and the weight coefficient W. In FIG. 20, a horizontal axis represents the standard deviation $\sigma$, and a vertical axis represents the weight coefficient W.

As illustrated in FIG. 20, the correction amount calculating unit 441 calculates the weight coefficient W based on the standard deviation $\sigma$ as indicated by a straight line LB1, a curved line LB2, and a broken line LB3. For example, the correction amount calculating unit 441 may calculate the weight coefficient W that linearly increases as indicated by the straight line LB1, may calculate the weight coefficient W that exponentially increases as indicated by the curved line LB2, or may calculate the weight coefficient W that increases in a stepwise manner as indicated by the broken line LB3, depending on the size of the standard deviation $\sigma$.

Referring back to FIG. 19, explanation from Step S402 will be continued.

At Step S402, the correction amount calculating unit 441 calculates an estimated value Est1 of an R component from R pixels among N1 × M1 pixels. Specifically, an average value of the R pixels in the range of the N1 × M1 pixels is calculated as the estimated value of the R component. The correction amount calculating unit 441 may calculate a different statistical value other than the average value as the estimated value. For example, the correction amount calculating unit 441 may calculate, as the estimated value, any of statistical values, such as a weighted average value, a median value, and an absolute value, except for a correction coefficient with the statistical values having predetermined values or larger.

Subsequently, the correction amount calculating unit 441 calculates the average value of the R pixels among the N2 × M2 pixels as an estimated value Est2 of the R component (Step S403). The correction amount calculating unit 441 sets the ranges of N1 × M1 and N2 × M2 such that the total number of pixels of N2 × M2 becomes larger than the total number of pixels of N1 × M1 used at Step S402 described above ((total number of N1 × M1 pixels) < (total number of N2 × M2 pixels)). Further, the correction amount calculating unit 441 may calculate a different statistical value other than the average value as the estimated value. For example, the correction amount calculating unit 441 may calculate, as the estimated value, any of statistical values, such as a weighted average value, a median value, and an absolute value, except for a correction coefficient with the statistical values having predetermined values or larger.

Thereafter, the correction amount calculating unit 441 calculates an estimated value Est from the weight coefficient W calculated at Step S401 and the estimated value Est1 and the estimated value Est2 calculated at Step S402 and Step S403 (Step S404). Specifically, the correction amount calculating unit 441 calculates the estimated value Est based on Equation (7) below.

$$\text{Est} = \text{Est2} \times \text{W} + \text{Est1} \times (1-\text{W}) \tag{7}$$

After Step S404, the image processing apparatus 40 returns to the R-component correction amount calculation process in FIG. 4.

According to the modification of the third embodiment of the present invention as described above, the estimated value is calculated using the weight coefficient that is based on the standard deviation of the pixel values of the neighboring pixels of the pixel of interest (x, y). Therefore, when variation of the pixel values of the neighboring pixels is large, it is possible to reduce the influence of the variation to the estimated value by increasing the weight coefficient and employing an average value. Consequently, it is possible to calculate the estimated value with high accuracy.

In the embodiment of the present invention, the correction amount calculating unit 441 calculates the estimated value Est using the weight coefficient W, the estimated value Est1, and the estimated value Est2. However, it may be possible to set a coefficient for each of the pixels in the range of N2 × M2 pixels and calculate an average value (that is, a weighted average) by multiplying each of the pixel values by the corresponding coefficient. In this case, it is sufficient that a coefficient set for a pixel present on the periphery of the pixel of interest (x, y) is constantly maintained high, and a coefficient for a pixel present distant from the pixel of interest (x, y) is set so as to increase in accordance with the standard deviation as illustrated in FIG. 20.

(Fourth Embodiment)

Next, a fourth embodiment of the present invention will be described. An imaging system according to the fourth embodiment employs a different kind of color filter from the color filter employed in the imaging apparatus 10 of the imaging system 1 according to the first embodiment described above, and an image processing apparatus performs a different correction amount calculation process. Specifically, in the fourth embodiment, a calculation method for calculating a correction amount is changed depending on arrangement (type) of the color filter. The same components as those of the imaging system 1 according to the first embodiment described above are denoted by the same reference signs, and explanation thereof will be omitted.

<Correction Amount Calculation Process>

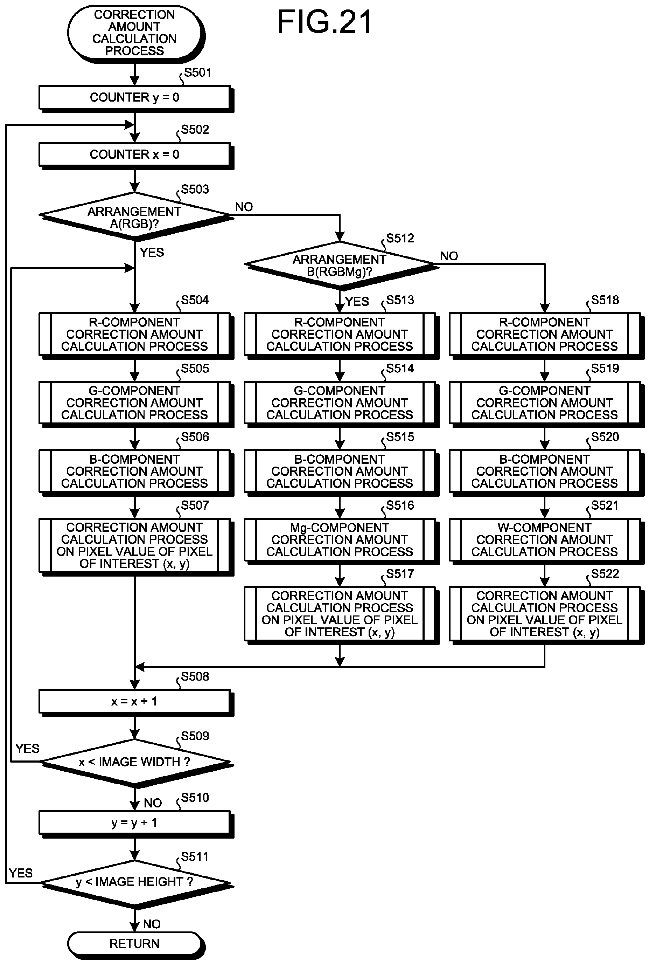

FIG. 21 is a flowchart illustrating an outline of a correction amount calculation process performed by the image processing apparatus 40 according to the fourth embodiment. Step S501 and Step S502 respectively correspond to Step S11 and Step S12 in FIG. 3 described above.

At Step S503, the correction amount calculating unit 441 determines whether an image corresponding to image data stored in the second buffer unit 422 of the second recording unit 42 is generated using the color filter 106 with arrangement A (RGB). For example, the correction amount calculating unit 441 determines whether the image is generated using the color filter 106 with the arrangement A (RGB) based on header information included in the image data stored in the second buffer unit 422 of the second recording unit 42. If the correction amount calculating unit 441 determines that the image corresponding to image data stored in the second buffer unit 422 of the second recording unit 42 is generated using the color filter 106 with the arrangement A (RGB) (Step S503: Yes), the image processing apparatus 40 proceeds to Step S504 to be described later. In contrast, if the correction amount calculating unit 441 determines that the image corresponding to image data stored in the second buffer unit 422 of the second recording unit 42 is not generated using the color filter 106 with the arrangement A (RGB) (Step S503: No), the image processing apparatus 40 proceeds to Step S512 to be described later.

Step S504 to Step S511 respectively correspond to Step S13 to Step S20 in FIG. 3 described above.

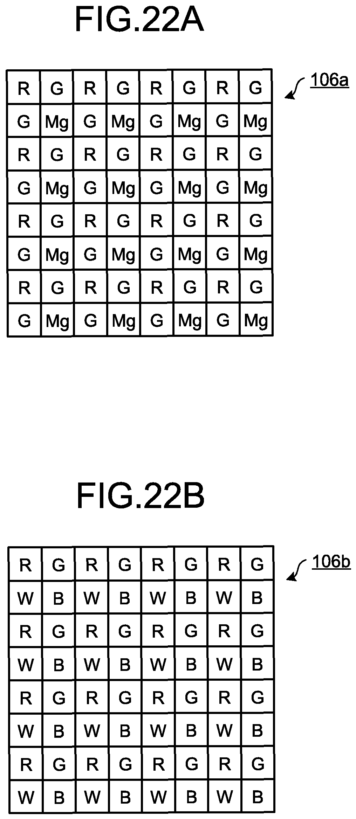

At Step S512, the correction amount calculating unit 441 determines whether an image corresponding to image data stored in the second buffer unit 422 of the second recording unit 42 is generated using the color filter 106 with arrangement B (RGBMg). FIG. 22A is a diagram schematically illustrating a configuration of the color filter with the arrangement B. A color filter 106a illustrated in FIG. 22A includes filters of magenta (Mg) that is a complementary color, instead of the R filters. The color filter 106a is configured such that each of the R filters, the G filters, the B filters, and the Mg filters are arranged on the light receiving surface of each of the pixels of the imaging element 105. FIG. 22B is a diagram schematically illustrating a configuration of a color filter with arrangement C. A color filter 106b illustrated in FIG. 22B includes W filters colored in white, instead of the G filters. The color filter 106b is configured such that each of the R filters, the G filters, the B filters, and the W filters is arranged on the light receiving surface of each of the pixels of the imaging element 105. In the following description, a pixel for which the filter Mg is arranged on the light receiving surface will be referred to as an Mg, and a pixel for which the filter W is arranged on the light receiving surface will be referred to as a W pixel. If the correction amount calculating unit 441 determines that the image corresponding to image data stored in the second buffer unit 422 of the second recording unit 42 is generated using the color filter 106a with the arrangement B (RGMg) (Step S512: Yes), the image processing apparatus 40 proceeds to Step S513 to be described later. In contrast, if the correction amount calculating unit 441 determines that the image corresponding to image data stored in the second buffer unit 422 of the second recording unit 42 is generated using the color filter 106a with the arrangement B (RGMg) (Step S512: No), the image processing apparatus 40 proceeds to Step S518 to be described later.

Step S513 to Step S515 respectively correspond to Step S13 to Step S15 in FIG. 3 described above.

At Step S516, the correction amount calculating unit 441 performs an Mg-component correction amount calculation process for calculating a correction amount of the Mg component in the pixel value of the pixel of interest (x, y). In the fourth embodiment, it is possible to calculate the correction amount of the Mg component by the Mg-component correction amount calculation process at Step S516 by performing the same process as described above by replacing the R component with the Mg component; therefore, explanation of the Mg-component correction amount calculation process will be omitted. Further, Step S517 corresponds to Step S16 in FIG. 3 described above. After Step S517, the image processing apparatus 40 proceeds to Step S508.

Step S518 to Step S520 respectively correspond to Step S13 to Step S15 in FIG. 3 described above.

At Step S521, the correction amount calculating unit 441 performs a W-component correction amount calculation process for calculating a correction amount of the W component in the pixel value of the pixel of interest (x, y). In the fourth embodiment, it is possible to calculate the correction amount of the W component by the W-component correction amount calculation process at Step S521 by performing the same process as described above by replacing the R component with the W component; therefore, explanation of the W-component correction amount calculation process will be omitted. Further, Step S522 corresponds to Step S16 in FIG. 3 described above. After Step S522, the image processing apparatus 40 proceeds to Step S508.

According to the fourth embodiment of the present invention, even when the imaging element is changed to the imaging element 105 having a color filter with different arrangement, it is possible to correct variation in the spectral sensitivity.

(Other Embodiments)

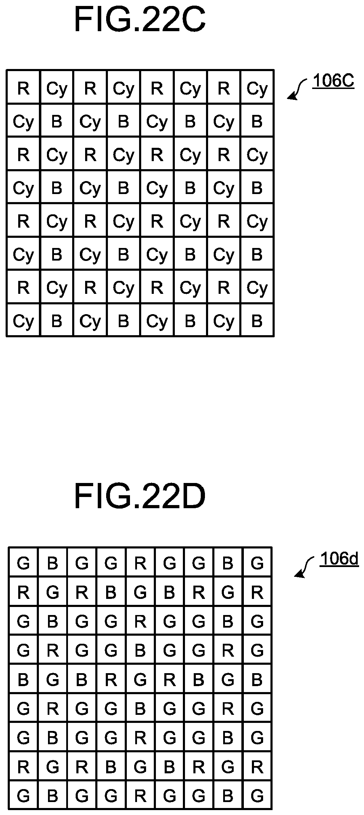

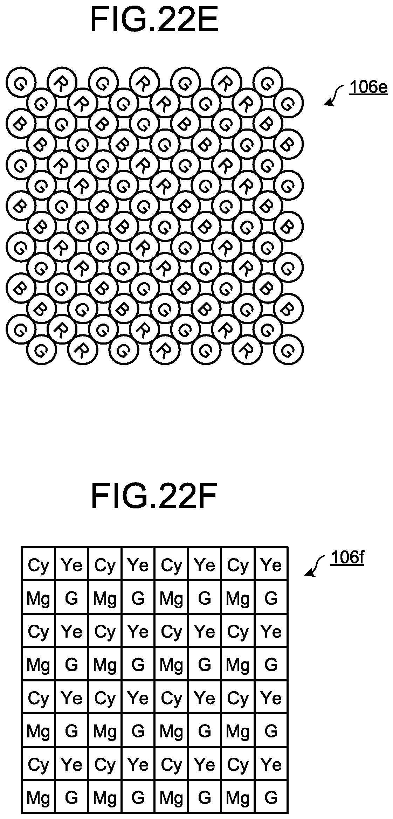

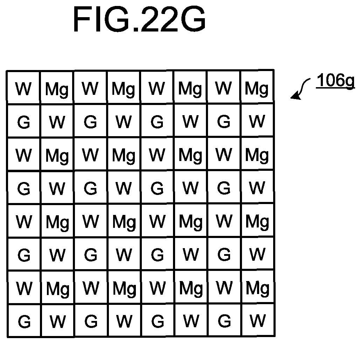

While the color filter 106 according to the first to fourth embodiments of the present invention is a color filter with Bayer arrangement including the R filters, the G filters, and the B filters, the present invention is applicable to other color filters. As illustrated in FIG. 22C, in the present invention, a color filter 106c may be employed, which is configured with the R filters, the B filters, and filters of cyan (Cy) that is a complementary color, instead of the G filters of the color filter 106 according to the first to fourth embodiments as described above. Further, as illustrated in FIG. 22D, in the present invention, a color filter 106d may be employed, in which arrangement of the R filters, the B filters, and the G filters is changed. Furthermore, as illustrated in FIG. 22E, in the present invention, a color filter 106e may be employed, in which each of the R filters, the G filters, and the B filters is arranged obliquely. Under the condition as illustrated in FIG. 22E, each of the pixels of the imaging element are also arranged obliquely. Moreover, as illustrated in FIG. 22F, in the present invention, a color filter 106f may be employed, which is a complementary color filter using cyan (Cy) filters, Mg filters, and yellow (Ye) filters. When the color filter 106f as illustrated in FIG. 22F is used, it is sufficient to employ a well-known interpolation method for interpolating primary colors from the complementary colors. Furthermore, as illustrated in FIG. 22G, in the present invention, a color filter 106g may be employed, which uses the W filters, the Mg filters, and the G filters.

Moreover, in the embodiments of the present invention, a plurality of color filters having different spectral transmittances are provided on a single imaging element. However, the present invention may be applied to, for example, an imaging apparatus of a two-chip system that uses an imaging element, in which only the G filter for transmitting a wavelength range of green is arranged on the light receiving surface of each of the pixels or arranged on the whole surface of the imaging element, and an imaging element, in which the R filter for transmitting a wavelength range of red and the B filter for transmitting a wavelength range of blue are arranged on the light receiving surfaces of the pixels in a checkered pattern. Alternatively, the present invention may be applied to an imaging apparatus of a three-chip system that uses imaging elements, in each of which only the R filter, the G filter, or the B filter is arranged. In this case, when calculating a correction coefficient of a G pixel in one of the imaging elements, it is possible to calculate a correction amount of the present invention by using a pixel value of an R pixel or a B pixel, which corresponds to the coordinates of the G pixel, in the other one of the imaging elements.

Furthermore, in the embodiments of the present invention, the correction amount calculating unit changes the method of calculating the estimated value or the method of calculating the correction amount by switching between a plurality of methods depending on various conditions. However, it may be possible to calculate the estimated value or the correction amount by synthesizing calculation results obtained through a plurality of methods depending on various conditions, instead of switching. It is of course possible for the correction amount calculating unit to change a synthesis ratio for synthesizing the calculation results depending on various conditions (for example, the conditions in the first to fourth embodiments described above), and calculate the estimated value or the correction amount by synthesizing the calculation results in accordance with the synthesis ratio.

The present invention is not limited to the embodiments as described above, and various modifications and applications may be made without departing from the scope of the present invention. For example, the image processing apparatus of the present invention may be provided, as an image processing engine, in any of the following apparatuses capable of imaging a subject: a mobile apparatus, such as a mobile phone or a smartphone, that includes an imaging element; and an imaging apparatus, such as a video camera, an endoscope, a security camera, or a microscope, that images a subject through an optical device, instead of the imaging system used in the description of the present invention.

In the description of the flowchart of the operation in this specification, the operation has been described using "first", "thereafter", and "subsequently", for the sake of convenience, but this does not mean that the operation needs to be performed in this order.

Further, the method of each of the processes performed by the image processing apparatus according to the embodiments described above, that is, the process illustrated in each of the flowcharts, may be stored as a program that is executable by a control unit, such as a CPU. In addition, the program may be stored in a storage medium of an external storage device, such as a memory card (a ROM card, a RAM card, or the like), a magnetic disk (a flexible disk, a hard disk, or the like), an optical disk (a CD-ROM, a DVD, or the like), or a semiconductor memory. The control unit, such as a CPU, reads the program stored in the storage medium of the external storage device, and controls the operation by the read program, so that the above-described processes can be executed.

Furthermore, the present invention is not limited to the above-described embodiments and modifications as they are. In the implementation stage, the present invention may be embodied with various modifications of the constituent elements within the scope not departing from the gist of the invention. In addition, various inventions may be made by appropriately combining a plurality of constituent elements disclosed in the above embodiments. For example, some constituent elements may be deleted from all of the constituent elements described in the embodiments and the modifications described above. Furthermore, the constituent elements described in the embodiments may be appropriately combined.

Moreover, in the specification or the drawings, a term that is at least once described together with a different term having a broader meaning or the same meaning may be replaced with the different term at any point in the specification or the drawings. Thus, various modifications and applications may be made without departing from the scope of the invention.

Reference Signs List

1        IMAGING SYSTEM

10       IMAGING APPARATUS
40       IMAGE PROCESSING APPARATUS
41       SECOND EXTERNAL I/F UNIT
42       SECOND RECORDING UNIT
43, 114  BUS
44       SPECTRAL SENSITIVITY VARIATION CORRECTING UNIT
45       IMAGE PROCESSING UNIT
50       DISPLAY DEVICE
101      OPTICAL SYSTEM
102      DIAPHRAGM
103      SHUTTER
104      DRIVER
105      IMAGING ELEMENT
106      COLOR FILTER
107      ANALOG PROCESSING UNIT
108      A/D CONVERTER
109      FIRST OPERATING UNIT
110      MEMORY I/F UNIT
111      RECORDING MEDIUM
112      VOLATILE MEMORY
113      NON-VOLATILE MEMORY
113a     PROGRAM RECORDING UNIT
113b     CORRECTION COEFFICIENT RECORDING UNIT
115      IMAGING CONTROL UNIT
116      FIRST EXTERNAL I/F UNIT
421      SECOND PROGRAM RECORDING UNIT
422      SECOND BUFFER UNIT
441      CORRECTION AMOUNT CALCULATING UNIT
442      PIXEL VALUE CORRECTING UNIT

**Claims**

**1.** An image processing apparatus comprising:

an acquiring unit configured to acquire image data generated by an imaging element, in which a predetermined arrangement pattern is formed using color filters of a plurality of colors with different spectral transmittances and each of the color filters is arranged at a position corresponding to one of pixels, and acquire a correction coefficient, which is for correcting a pixel value difference that corresponds to a difference between spectral sensitivity of a pixel of interest and reference spectral sensitivity set in advance in a predetermined wavelength region, from a recording unit that records the correction coefficient for each of the pixels;
a correction amount calculating unit configured to calculate an estimated value of a color component to be corrected in the pixel of interest, and calculate a correction amount of a pixel value of the pixel of interest based on the estimated value and the correction coefficient of the pixel of interest; and

a pixel value correcting unit configured to correct the pixel value of the pixel of interest based on the correction amount calculated by the correction amount calculating unit, wherein
the correction amount calculating unit changes a method of calculating the estimated value and a method of calculating the correction amount depending on a predetermined condition.

2. The image processing apparatus according to claim 1, wherein the correction amount calculating unit changes the method of calculating the estimated value depending on whether pixel values of different-color pixels are saturated, the different-color pixels being pixels which are present on a periphery of the pixel of interest and for which color filters of a certain color different from a color of the color filter arranged on the pixel of interest is arranged.

3. The image processing apparatus according to claim 2, wherein
the correction amount calculating unit is further configured to,
when the pixel values of the different-color pixels are saturated, calculate similarities from candidate values of the estimated value, from theoretical values of pixel values of neighboring same-color pixels that are present on the periphery of the pixel of interest and that are calculated based on the correction coefficients of respective pixels of the neighboring same-color pixels for which color filters having a same color as the color of the color filter arranged on the pixel of interest are arranged, and from measurement values of the pixel values of the neighboring same-color pixels, and calculate a candidate value with a high similarity as the estimated value, and
when the pixel values of the different-color pixels are not saturated, calculate the estimated value of the color component to be corrected in the pixel of interest by using pixel values of respective pixels of neighboring pixels that are present on the periphery of the pixel of interest.

4. The image processing apparatus according to claim 3, wherein the theoretical value is a product of the candidate value and the correction coefficient of each of the neighboring same-color pixels.

5. The image processing apparatus according to claim 3 or 4, wherein the similarity is a value that is based on the theoretical value and the measurement value of each of the neighboring same-color pixels.

6. The image processing apparatus according to claim 1, wherein the correction amount calculating unit changes the method of calculating the estimated value depending on whether pixel values of neighboring pixels present on the periphery of the pixel of interest are flat.

7. The image processing apparatus according to claim 6, wherein
the correction amount calculating unit is further configured to
when the pixel values of the neighboring pixels are flat, calculate the estimated value of the color component to be corrected in the pixel of interest by using the pixel values of the neighboring pixels, or calculate the estimated value of the color component to be corrected in the pixel of interest by using the pixel values of the neighboring pixels and the correction coefficient, and
when the pixel values of the neighboring pixels are not flat, change a pixel range to be referred to in accordance with an edge direction of the neighboring pixels, and calculate the estimated value of the color component to be corrected in the pixel of interest by using the pixel values of the neighboring pixels or calculate the estimated value of the color component to be corrected in the pixel of interest by using the pixel values of the neighboring pixels and the correction coefficient.

8. The image processing apparatus according to claim 1, wherein the correction amount calculating unit changes the method of calculating the estimated value depending on a size of random noise of the neighboring pixels that are present on the periphery of the pixel of interest.

9. The image processing apparatus according to claim 8, wherein the correction amount calculating unit changes a pixel range to be referred to or a shape of the pixel range depending on the size of the random noise, and calculates an estimated value of a color component having a same color as different-color pixels, which are present on the periphery of the pixel of interest and for which color filters of a certain color different from the color of the color filter arranged on the pixel of interest are arranged.

10. The image processing apparatus according to claim 1, wherein the correction amount calculating unit changes neighboring pixels to be referred to depending on an arrangement pattern of the color filter arranged on the imaging element, and calculates a correction amount of a color component having a same color as different color pixels, which are present on the periphery of the pixel of interest and for which color filters of a certain color different from the color of the color filter arranged on the pixel of interest are arranged.

11. The image processing apparatus according to any one of claims 1 to 10, wherein the pixel value correcting unit subtracts the correction amount calculated by the correction amount calculating unit from the pixel value of the pixel of interest.

12. The image processing apparatus according to claim 3, wherein the pixel value correcting unit corrects the pixel value of the pixel of interest by using the correction amount such that a corrected pixel value of the pixel of interest falls in a range between an average value of the pixel values of the neighboring same-color pixels and the pixel value of the pixel of interest.

13. The image processing apparatus according to claim 12, wherein when a difference between a value that is obtained by subtracting the correction amount from the pixel value of the pixel of interest and the average value of the pixel values of the neighboring same-color pixels is larger than a predetermined value, the pixel value correcting unit does not subtract the correction value from the pixel value of the pixel of interest.

14. The image processing apparatus according to any one of claims 1 to 13, wherein the correction amount calculating unit changes the method of calculating the estimated value or the method of calculating the correction amount by switching between a plurality of the methods.

15. The image processing apparatus according to any one of claims 1 to 13, wherein the correction amount calculating unit changes a synthesis ratio for synthesizing calculation results obtained through a plurality of methods of calculating the estimated value and calculation results obtained through a plurality of methods of calculating the correction amount.

16. An image processing method comprising:

an acquisition step of acquiring image data generated by an imaging element, in which a predetermined arrangement pattern is formed using color filters of a plurality of colors with different spectral transmittances and each of the color filters is arranged at a position corresponding to one of pixels, and acquiring a correction coefficient, which is for correcting a pixel value difference that corresponds to a difference between spectral sensitivity of a pixel of interest and reference spectral sensitivity set in advance in a predetermined wavelength region, from a recording unit that records the correction coefficient for each of the pixels;
a correction amount calculation step of calculating an estimated value of a color component to be corrected in the pixel of interest, and calculating a correction amount of a pixel value of the pixel of interest based on the estimated value and the correction coefficient of the pixel of interest; and
a pixel value correction step of correcting the pixel value of the pixel of interest based on the correction amount calculated at the correction amount calculation step, wherein
the correction amount calculation step includes changing a method of calculating the estimated value and a method of calculating the correction amount depending on a predetermined condition.

17. A program that causes an image processing apparatus to perform:

an acquisition step of acquiring image data generated by an imaging element, in which a predetermined arrangement pattern is formed using color filters of a plurality of colors with different spectral transmittances and each of the color filters is arranged at a position corresponding to one of pixels, and acquiring a correction coefficient, which is for correcting a pixel value difference that corresponds to a difference between spectral sensitivity of a pixel of interest and reference spectral sensitivity set in advance in a predetermined wavelength region, from a recording unit that records the correction coefficient for each of the pixels;
a correction amount calculation step of calculating an estimated value of a color component to be corrected in the pixel of interest, and calculating a correction amount of a pixel value of the pixel of interest based on the estimated value and the correction coefficient of the pixel of interest; and
a pixel value correction step of correcting the pixel value of the pixel of interest based on the correction amount calculated at the correction amount calculation step, wherein
the correction amount calculation step includes changing a method of calculating the estimated value and a method of calculating the correction amount depending on a predetermined condition.

# FIG.1A

# FIG.1B

106

| R | G | R | G | R | G | R | G |
|---|---|---|---|---|---|---|---|
| G | B | G | B | G | B | G | B |
| R | G | R | G | R | G | R | G |
| G | B | G | B | G | B | G | B |
| R | G | R | G | R | G | R | G |
| G | B | G | B | G | B | G | B |
| R | G | R | G | R | G | R | G |
| G | B | G | B | G | B | G | B |

# FIG.2

START

S1

CORRECTION AMOUNT
CALCULATION PROCESS

S2

CORRECT PIXEL VALUES

END

# FIG.3

```
      ┌────────────────────────┐
      │        CORRECTION       │
      │  AMOUNT CALCULATION     │
      │        PROCESS          │
      └────────────────────────┘
                 │
                 ▼                    ⟋S11
      ┌────────────────────────┐
      │      COUNTER y = 0      │
      └────────────────────────┘
                 │
                 ▼                    ⟋S12
      ┌────────────────────────┐
      │      COUNTER x = 0      │
      └────────────────────────┘
                 │
                 ▼                    ⟋S13
      ┌────────────────────────┐
      │  R-COMPONENT CORRECTION │
      │ AMOUNT CALCULATION PROCESS│
      └────────────────────────┘
                 │
                 ▼                    ⟋S14
      ┌────────────────────────┐
      │  G-COMPONENT CORRECTION │
      │ AMOUNT CALCULATION PROCESS│
      └────────────────────────┘
                 │
                 ▼                    ⟋S15
      ┌────────────────────────┐
      │  B-COMPONENT CORRECTION │
      │ AMOUNT CALCULATION PROCESS│
      └────────────────────────┘
                 │
                 ▼                    ⟋S16
      ┌────────────────────────┐
      │   CORRECTION AMOUNT     │
      │ CALCULATION PROCESS ON  │
      │ PIXEL VALUE OF PIXEL OF │
      │   INTEREST (x, y)       │
      └────────────────────────┘
                 │
                 ▼                    ⟋S17
      ┌────────────────────────┐
      │        x = x + 1        │
      └────────────────────────┘
                 │
                 ▼                    ⟋S18
   YES     ◇ x < IMAGE WIDTH ? ◇
                 │ NO
                 ▼                    ⟋S19
      ┌────────────────────────┐
      │        y = y + 1        │
      └────────────────────────┘
                 │
                 ▼                    ⟋S20
   YES     ◇ y < IMAGE HEIGHT ? ◇
                 │ NO
                 ▼
      ┌────────────────────────┐
      │         RETURN          │
      └────────────────────────┘
```

# FIG.4

R-COMPONENT CORRECTION AMOUNT CALCULATION PROCESS

↓

S31
R-COMPONENT ESTIMATED VALUE CALCULATION PROCESS

↓

S32
CALCULATE CORRECTION AMOUNT OF R COMPONENT

↓

RETURN

# FIG.5

G-COMPONENT CORRECTION AMOUNT CALCULATION PROCESS

↓

S33
G-COMPONENT ESTIMATED VALUE CALCULATION PROCESS

↓

S34
CALCULATE CORRECTION AMOUNT OF G COMPONENT

↓

RETURN

# FIG.6

B-COMPONENT
CORRECTION AMOUNT
CALCULATION
PROCESS

S35

B-COMPONENT ESTIMATED
VALUE CALCULATION PROCESS

S36

CALCULATE CORRECTION AMOUNT
OF B COMPONENT

RETURN

# FIG.7

R-COMPONENT
ESTIMATED VALUE
CALCULATION
PROCESS

S51

ARE
PIXEL VALUES OF
NEIGHBORING R PIXELS
SATURATED?

YES

NO → S52

R-COMPONENT ESTIMATED
VALUE CALCULATION
PROCESS BASED ON
AVERAGE

S53

R-COMPONENT ESTIMATED
VALUE CALCULATION
PROCESS BASED ON
SIMILARITY

RETURN

# FIG.8

R-COMPONENT
ESTIMATED VALUE
CALCULATION PROCESS
BASED ON AVERAGE

S61

CALCULATE AVERAGE VALUE AveR
OF PIXEL VALUES OF R PIXELS
AROUND PIXEL OF INTEREST (x, y)

S62

CALCULATE AVERAGE VALUE AveR
AS R-COMPONENT ESTIMATED
VALUE OF PIXEL OF INTEREST (x, y)

RETURN

# FIG.9

```
    ╭─────────────────────────╮
    │      R-COMPONENT         │
    │   ESTIMATED VALUE        │
    │  CALCULATION PROCESS     │
    │   BASED ON SIMILARITY    │
    ╰─────────────────────────╯
                │
                ▼                          S71
┌──────────────────────────────────────────────┐
│ CALCULATE AVERAGE VALUE AveCoef OF R-COMPONENT │
│  CORRECTION COEFFICIENTS OF PIXELS PRESENT     │
│ AROUND PIXEL OF INTEREST (x, y) AND HAVING SAME│
│    COLOR AS PIXEL OF INTEREST (x, y)           │
└──────────────────────────────────────────────┘
                │
                ▼                          S72
┌──────────────────────────────────────────────┐
│  CALCULATE AVERAGE VALUE AvePix OF PIXEL VALUES│
│ PRESENT AROUND PIXEL OF INTEREST (x, y) AND HAVING│
│    SAME COLOR AS PIXEL OF INTEREST (x, y)      │
└──────────────────────────────────────────────┘
                │
                ▼                          S73
┌──────────────────────────────────────────────┐
│  INITIALIZE CANDIDATE VALUE Est SUCH THAT Est = Est0│
└──────────────────────────────────────────────┘
                │
                ▼                          S74
┌──────────────────────────────────────────────┐
│  INITIALIZE SIMILARITY Sim SUCH THAT Sim = MAX │
└──────────────────────────────────────────────┘
                │
                ▼                          S75
┌──────────────────────────────────────────────┐
│  INITIALIZE COUNTER Step SUCH THAT Step = 0    │
└──────────────────────────────────────────────┘
                │
                ▼                          S76
┌──────────────────────────────────────────────┐
│    CALCULATE TWO LARGE AND SMALL               │
│    CANDIDATE VALUES Estp AND Estm              │
└──────────────────────────────────────────────┘
                │
                ▼                          S77
┌──────────────────────────────────────────────┐
│  SIMILARITY CALCULATION PROCESS ON EACH OF     │
│     R-COMPONENT CANDIDATE VALUES               │
└──────────────────────────────────────────────┘
                │
                ▼                          S78
┌──────────────────────────────────────────────┐
│    SELECT CANDIDATE VALUE WHOSE                │
│    SIMILARITY IS MINIMUM VALUE                 │
└──────────────────────────────────────────────┘
                │
                ▼                          S79
┌──────────────────────────────────────────────┐
│    UPDATE CANDIDATE VALUE Est                  │
└──────────────────────────────────────────────┘
                │
                ▼                          S80
┌──────────────────────────────────────────────┐
│           Step = Step + 1                      │
└──────────────────────────────────────────────┘
                │
                ▼                          S81
YES     ◇─────────────────────────◇
        ◇       Step < n ?         ◇
        ◇─────────────────────────◇
                │ NO                        S82
                ▼
┌──────────────────────────────────────────────┐
│    CALCULATE CANDIDATE VALUE Est AS            │
│    R-COMPONENT ESTIMATED VALUE                 │
└──────────────────────────────────────────────┘
                │
                ▼
        ╭──────────────────╮
        │      RETURN       │
        ╰──────────────────╯
```

# FIG.10

INITIAL TIME · FIRST TIME · SECOND TIME · THIRD TIME · FOURTH TIME

Est0

Estp(0)
Simp(0)

$+Est0/2^0$

CANDIDATE VALUE Est0
SIMILARITY MAX

Estp(2)
Simp(2)

Estp(3)
Simp(3)

$+Est0/2^2$      $+Est0/2^3$

Estp(1)
Simp(1)

Estp(1)
Simp(1)

Estp(1)
Simp(1)

Estp(4)
Simp(4)

$-Est0/2^0$

$-Est0/2^2$      $-Est0/2^3$

Estm(3)
Simm(3)

Estm(3)
Simm(3)

$+Est/2^1$

Estm(2)
Simm(2)

Estm(4)
Simm(4)

Estm(0)
Simm(0)

Estm(0)
Simm(0)

$-Est0/2^1$

Estm(1)
Simm(1)

...

EP 3 402 187 A1

# FIG.11

```
SIMILARITY CALCULATION
PROCESS ON EACH
R-COMPONENT CANDIDATE
VALUE
```

S91

ACQUIRE PIXEL VALUES OF PIXELS PRESENT AROUND PIXEL OF INTEREST (x, y) AND HAVING SAME COLOR AS PIXEL OF INTEREST (x, y) AND R-COMPONENT CORRECTION COEFFICIENT

S92

CALCULATE THEORETICAL VALUE Ideal FOR EACH PIXEL

S93

CALCULATE MEASUREMENT VALUE Val FOR EACH PIXEL

S94

CALCULATE ABSOLUTE DIFFERENCE VALUE Diff BETWEEN THEORETICAL VALUE Ideal AND MEASUREMENT VALUE Val FOR EACH PIXEL

S95

CALCULATE SUM OF ABSOLUTE DIFFERENCE VALUES Diff AS SIMILARITY Sim

RETURN

# FIG.12

```
CORRECTION AMOUNT
CALCULATION PROCESS ON
PIXEL VALUE OF PIXEL OF
INTEREST (x, y)
```

S101

CALCULATE SUM Sumc OF CORRECTION AMOUNTS OF R, G, AND B COMPONENTS

S102

CALCULATE SUM Sumc AS CORRECTION AMOUNT OF PIXEL OF INTEREST (x, y)

RETURN

# FIG.13

CORRECTION AMOUNT CALCULATION PROCESS ON PIXEL VALUE OF PIXEL OF INTEREST (x, y)

**S111**
CALCULATE SUM Sumc OF CORRECTION AMOUNTS OF R, G, AND B COMPONENTS

**S112**
CALCULATE AVERAGE VALUE Ave OF PIXEL VALUES OF PIXELS PRESENT AROUND PIXEL OF INTEREST (x, y) AND HAVING SAME COLOR AS PIXEL OF INTEREST (x, y)

**S113**
CALCULATE DIFFERENCE Delta BETWEEN AVERAGE VALUE Ave AND PIXEL VALUE Pix OF PIXEL OF INTEREST
Delta = Pix - Ave

**S114**
ARE SIGNS OF Delta AND Sumc SAME? — NO

YES

**S115**
|Delta| < |Sumc| ? — NO

YES

**S116**
Sumc = Delta

**S117**
Sumc = 0

**S118**
CALCULATE SUM Sumc AS CORRECTION AMOUNT OF PIXEL OF INTEREST (x, y)

RETURN

# FIG.14

R-COMPONENT
ESTIMATED VALUE
CALCULATION
PROCESS

S121

R-COMPONENT FLATNESS
CALCULATION PROCESS

S122

ARE R-PIXEL
VALUES OF NEIGHBORING
PIXELS FLAT?

YES

NO ⎵ S123

R-COMPONENT ESTIMATED
VALUE CALCULATION
PROCESS BASED ON
CONSIDERATION OF FLAT
DIRECTION

S124

R-COMPONENT ESTIMATED
VALUE CALCULATION
PROCESS BASED ON AVERAGE

RETURN

# FIG.15

R-COMPONENT
ESTIMATED VALUE
CALCULATION PROCESS
BASED ON
CONSIDERATION OF
FLAT DIRECTION

S131

ACQUIRE PIXEL VALUES IN dir DIRECTION

S132

CALCULATE ESTIMATED VALUE

RETURN

# FIG.16

```
    ╭─────────────────────────╮
    │ R-COMPONENT FLATNESS    │
    │ CALCULATION PROCESS     │
    ╰─────────────────────────╯
                 │
                 ▼
    ┌─────────────────────────┐
    │         dir = 1         │──── S201
    └─────────────────────────┘
                 │
                 ▼
    ┌─────────────────────────┐
    │        △dir = 0         │──── S202
    └─────────────────────────┘
                 │
                 ▼
    ┌─────────────────────────┐
    │        Num = 0          │──── S203
    └─────────────────────────┘
                 │
                 ▼
    ┌─────────────────────────┐
    │          d = 1          │──── S204
    └─────────────────────────┘
                 │
                 ▼
    ┌─────────────────────────┐
    │          i = 2          │──── S205
    └─────────────────────────┘
                 │
                 ▼
    ┌──────────────────────────────┐
    │ ACQUIRE i-1ᵀᴴ PIXEL VALUE    │──── S206
    └──────────────────────────────┘
                 │
                 ▼
    ┌──────────────────────────────┐
    │ ACQUIRE iᵀᴴ PIXEL VALUE      │──── S207
    └──────────────────────────────┘
                 │
                 ▼
    ┌────────────────────────────────────┐
    │ CALCULATE ABSOLUTE VALUE OF DIFFERENCE │──── S208
    └────────────────────────────────────┘
                 │
                 ▼
    ┌──────────────────────────────────────────┐
    │ △dir(d) = △dir(d) + ABSOLUTE VALUE OF DIFFERENCE │──── S209
    └──────────────────────────────────────────┘
                 │
                 ▼
    ┌─────────────────────────┐
    │        i = i + 1        │──── S210
    └─────────────────────────┘
                 │
                 ▼
   YES      ◇ i ≤ iMax ? ◇──── S211
    ◄────────────┤
              NO │
                 ▼
    ┌──────────────────────────────┐
    │ △dir(d) = △dir(d) / (iMax - 1) │──── S212
    └──────────────────────────────┘
                 │
                 ▼
    ┌─────────────────────────┐
    │        d = d + 1        │──── S213
    └─────────────────────────┘
                 │
                 ▼
   YES      ◇ d ≤ dMax ? ◇──── S214
    ◄────────────┤
              NO │
                 ▼
    ┌──────────────────────────────────────────┐
    │ △dir = AVERAGE VALUE OF △dir(1), ..., △dir(dMax) │──── S215
    └──────────────────────────────────────────┘
                 │
                 ▼
    ┌─────────────────────────┐
    │       dir = dir + 1     │──── S216
    └─────────────────────────┘
                 │
                 ▼
   YES      ◇ dir ≤ 4 ? ◇──── S217
    ◄────────────┤
              NO │
                 ▼
    ┌─────────────────────────┐
    │   CALCULATE FLATNESS     │──── S218
    └─────────────────────────┘
                 │
                 ▼
    ╭─────────────────────────╮
    │         RETURN          │
    ╰─────────────────────────╯
```

## FIG.17A

## FIG.17B

## FIG.17C

## FIG.17D

## FIG.17E

## FIG.17F

## FIG.17G

## FIG.17H

## FIG.17I

## FIG.17J

## FIG.17K

## FIG.17L

## FIG.17M

## FIG.17N

## FIG.17O

## FIG.17P

A1(d=1)

T1

# FIG.18

R-COMPONENT
ESTIMATED VALUE
CALCULATION
PROCESS

↓

STANDARD
DEVIATION OF R-PIXEL
VALUES OF NEIGHBORING
PIXELS > $\sigma^{TH}$ ? — S301

YES →

NO ↓ — S302

CALCULATE R-COMPONENT
ESTIMATED VALUE FROM
R PIXELS AMONG N1 × M1 PIXELS

— S303
CALCULATE R-COMPONENT
ESTIMATED VALUE FROM
R PIXELS AMONG N2 × M2 PIXELS

RETURN

# FIG.19

R-COMPONENT
ESTIMATED VALUE
CALCULATION
PROCESS

↓ — S401

CALCULATE WEIGHT COEFFICIENT
W BASED ON STANDARD DEVIATION OF
R PIXEL VALUES OF NEIGHBORING PIXELS

↓ — S402

CALCULATE R-COMPONENT ESTIMATED VALUE Est1
FROM R PIXELS AMONG N1 × M1 PIXELS

↓ — S403

CALCULATE R-COMPONENT ESTIMATED VALUE Est2
FROM R PIXELS AMONG N2 × M2 PIXELS

↓ — S404

CALCULATE ESTIMATED VALUE Est FROM WEIGHT
COEFFICIENT W AND ESTIMATED VALUES Est1 AND Est2

↓

RETURN

# FIG.20

# FIG.21

```
        ┌──────────────┐
        │  CORRECTION  │
        │    AMOUNT    │
        │ CALCULATION  │
        │   PROCESS    │
        └──────┬───────┘
               │         S501
        ┌──────▼───────┐
        │ COUNTER y = 0│
        └──────┬───────┘
               │         S502
        ┌──────▼───────┐
        │ COUNTER x = 0│
        └──────┬───────┘
               │         S503
         ◇ ARRANGEMENT ◇──NO──►
         ◇   A(RGB)?   ◇
               │ YES
```

| S504 R-COMPONENT CORRECTION AMOUNT CALCULATION PROCESS | S513 R-COMPONENT CORRECTION AMOUNT CALCULATION PROCESS | S518 R-COMPONENT CORRECTION AMOUNT CALCULATION PROCESS |
|---|---|---|
| S505 G-COMPONENT CORRECTION AMOUNT CALCULATION PROCESS | S514 G-COMPONENT CORRECTION AMOUNT CALCULATION PROCESS | S519 G-COMPONENT CORRECTION AMOUNT CALCULATION PROCESS |
| S506 B-COMPONENT CORRECTION AMOUNT CALCULATION PROCESS | S515 B-COMPONENT CORRECTION AMOUNT CALCULATION PROCESS | S520 B-COMPONENT CORRECTION AMOUNT CALCULATION PROCESS |
| S507 CORRECTION AMOUNT CALCULATION PROCESS ON PIXEL VALUE OF PIXEL OF INTEREST (x, y) | S516 Mg-COMPONENT CORRECTION AMOUNT CALCULATION PROCESS | S521 W-COMPONENT CORRECTION AMOUNT CALCULATION PROCESS |
| | S517 CORRECTION AMOUNT CALCULATION PROCESS ON PIXEL VALUE OF PIXEL OF INTEREST (x, y) | S522 CORRECTION AMOUNT CALCULATION PROCESS ON PIXEL VALUE OF PIXEL OF INTEREST (x, y) |

S512 ARRANGEMENT B(RGBMg)? NO ──► YES

```
               S508
        ┌──────────────┐
        │  x = x + 1   │
        └──────┬───────┘
               │         S509
    ◄──YES──◇ x < IMAGE WIDTH ? ◇
               │ NO       S510
        ┌──────▼───────┐
        │  y = y + 1   │
        └──────┬───────┘
               │         S511
    ◄──YES──◇ y < IMAGE HEIGHT ? ◇
               │ NO
        ┌──────▼───────┐
        │    RETURN    │
        └──────────────┘
```

# FIG.22A

| R | G | R | G | R | G | R | G |
|---|---|---|---|---|---|---|---|
| G | Mg | G | Mg | G | Mg | G | Mg |
| R | G | R | G | R | G | R | G |
| G | Mg | G | Mg | G | Mg | G | Mg |
| R | G | R | G | R | G | R | G |
| G | Mg | G | Mg | G | Mg | G | Mg |
| R | G | R | G | R | G | R | G |
| G | Mg | G | Mg | G | Mg | G | Mg |

106a

# FIG.22B

| R | G | R | G | R | G | R | G |
|---|---|---|---|---|---|---|---|
| W | B | W | B | W | B | W | B |
| R | G | R | G | R | G | R | G |
| W | B | W | B | W | B | W | B |
| R | G | R | G | R | G | R | G |
| W | B | W | B | W | B | W | B |
| R | G | R | G | R | G | R | G |
| W | B | W | B | W | B | W | B |

106b

# FIG.22C

| R | Cy | R | Cy | R | Cy | R | Cy |
|---|----|---|----|---|----|---|----|
| Cy | B | Cy | B | Cy | B | Cy | B |
| R | Cy | R | Cy | R | Cy | R | Cy |
| Cy | B | Cy | B | Cy | B | Cy | B |
| R | Cy | R | Cy | R | Cy | R | Cy |
| Cy | B | Cy | B | Cy | B | Cy | B |
| R | Cy | R | Cy | R | Cy | R | Cy |
| Cy | B | Cy | B | Cy | B | Cy | B |

106C

# FIG.22D

| G | B | G | G | R | G | G | B | G |
|---|---|---|---|---|---|---|---|---|
| R | G | R | B | G | B | R | G | R |
| G | B | G | G | R | G | G | B | G |
| G | R | G | G | B | G | G | R | G |
| B | G | B | R | G | R | B | G | B |
| G | R | G | G | B | G | G | R | G |
| G | B | G | G | R | G | G | B | G |
| R | G | R | B | G | B | R | G | R |
| G | B | G | G | R | G | G | B | G |

106d

# FIG.22E

106e

# FIG.22F

| Cy | Ye | Cy | Ye | Cy | Ye | Cy | Ye |
|----|----|----|----|----|----|----|----|
| Mg | G | Mg | G | Mg | G | Mg | G |
| Cy | Ye | Cy | Ye | Cy | Ye | Cy | Ye |
| Mg | G | Mg | G | Mg | G | Mg | G |
| Cy | Ye | Cy | Ye | Cy | Ye | Cy | Ye |
| Mg | G | Mg | G | Mg | G | Mg | G |
| Cy | Ye | Cy | Ye | Cy | Ye | Cy | Ye |
| Mg | G | Mg | G | Mg | G | Mg | G |

106f

# FIG.22G

| W | Mg | W | Mg | W | Mg | W | Mg |
|---|----|---|----|---|----|---|----|
| G | W | G | W | G | W | G | W |
| W | Mg | W | Mg | W | Mg | W | Mg |
| G | W | G | W | G | W | G | W |
| W | Mg | W | Mg | W | Mg | W | Mg |
| G | W | G | W | G | W | G | W |
| W | Mg | W | Mg | W | Mg | W | Mg |
| G | W | G | W | G | W | G | W |

106g

## INTERNATIONAL SEARCH REPORT

| | International application No. |
|---|---|
| | PCT/JP2016/050572 |

**A. CLASSIFICATION OF SUBJECT MATTER**
*H04N9/07(2006.01)i*

According to International Patent Classification (IPC) or to both national classification and IPC

**B. FIELDS SEARCHED**

Minimum documentation searched (classification system followed by classification symbols)
H04N9/07

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-193378 A (Nikon Corp.), 02 September 2010 (02.09.2010), paragraph [0005]; fig. 7 (Family: none) | 1-17 |
| A | JP 2010-190741 A (Nikon Corp.), 02 September 2010 (02.09.2010), entire text; all drawings (Family: none) | 1-17 |
| A | JP 2007-010364 A (Konica Minolta Sensing, Inc.), 18 January 2007 (18.01.2007), entire text; all drawings & US 2006/0290929 A1 | 1-17 |

☐ Further documents are listed in the continuation of Box C.   ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| 01 March 2016 (01.03.16) | 29 March 2016 (29.03.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**EP 3 402 187 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010193378 A